# EUROPEAN PATENT APPLICATION

(11) **EP 4 564 905 A1**
(43) Date of publication of application: **04.06.2025**
(21) Application number: 23851405.3
(22) Date of filing: 27.06.2023
(51) Int. Cl.: H04W 28/24

(54) **COMMUNICATION METHOD AND APPARATUS**

(30) Priority: 10.08.2022 CN 202210957625
(71) Applicant: Huawei Technologies Co., Ltd., Shenzhen, Guangdong 518129 (CN)
(72) Inventor: HUANG, Kang, Shenzhen, Guangdong 518129 (CN); XU, Yishan, Shenzhen, Guangdong 518129 (CN)
(74) Representative: Maiwald GmbH
(86) International application number: PCT/CN2023/102889
(87) International publication number: WO 2024/032178

(57) **Abstract**

A communication method and apparatus are provided. The method includes: A residential gateway receives a packet from a terminal device that accesses the residential gateway, where the packet includes a first DSCP value and first indication information, the first indication information includes an identifier of a public land mobile network of the terminal device or an IP address of a first access network device, and the first access network device is located in the public land mobile network of the terminal device; the residential gateway determines, based on the first indication information and the first DSCP value, a QoS requirement corresponding to the first indication information and the first DSCP value; and the residential gateway sends the packet based on the QoS requirement. According to the foregoing design, quality of service of an uplink data packet between the residential gateway and a user plane network element can be ensured.

## Description

### CROSS-REFERENCE TO RELATED APPLICATIONS

This application claims priority to Chinese Patent Application No. 202210957625.1, filed with the China National Intellectual Property Administration on August 10, 2022 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

A differentiated services code point (differentiated services code point, DSCP) value is usually located in an internet protocol (internet protocol, IP) packet header, and may be used as identification information of a user plane data flow, or may be mapped to a specific quality of service (quality of service, QoS) requirement.

In an underlay (underlay) network and an overlay (overlay) network, a QoS requirement of a data packet (that is, a downlink data packet) from the overlay network may be mapped to a DSCP value in an IP packet header via a non-3GPP interworking function (non-3GPP interworking function, N3IWF) network element or a trusted non-3GPP gateway function (trusted non-3GPP gateway function, TNGF) network element, and a user plane network element (user plane function, UPF) in the underlay network converts the DSCP value in the IP packet header of the received data packet into a QoS requirement based on a mapping relationship between the DSCP value and the QoS requirement. In this method, QoS collaboration between the underlay network and the overlay network can be implemented, to ensure quality of service of a downlink data packet of a terminal device when the downlink data packet passes through a public land mobile network (public land mobile network, PLMN) of an accessed residential gateway.

Therefore, how to ensure quality of service of an uplink data packet sent by the terminal device when the uplink data packet passes through the PLMN of the accessed residential gateway is a problem worthy of attention.

### SUMMARY

This application provides a communication method and apparatus, to ensure quality of service of an uplink data packet sent by a terminal device when the uplink data packet passes through a PLMN of an accessed residential gateway.

According to a first aspect, this application provides a communication method. The method includes:
A residential gateway receives a packet from a terminal device, where the packet includes a first DSCP value and first indication information, the first indication information includes an identifier of a public land mobile network of the terminal device or an IP address of a first access network device, and the first access network device is located in the public land mobile network of the terminal device; the residential gateway determines, based on the first indication information and the first DSCP value, a QoS requirement corresponding to the first indication information and the first DSCP value; and the residential gateway sends the packet based on the QoS requirement.

The access network device may be a 3GPP access network device, or may be a non-3GPP access network device. The 3GPP access network device is used by the terminal device to access a network by using a 3GPP technology, and the non-3GPP access network device is used by the terminal device to access the network by using a non-3GPP technology. The non-3GPP access network device may be a non-3GPP interworking function network element or a trusted non-3GPP gateway function network element. The residential gateway may be considered as a terminal device, and is referred to as a first terminal device. A terminal device that accesses the residential gateway is referred to as a second terminal device.

According to the foregoing design, the residential gateway may determine, based on the first indication information and the first DSCP value that are included in the uplink data packet received from the terminal device, the QoS requirement corresponding to the first indication information and the first DSCP value, and send the uplink data packet based on the QoS requirement. This can ensure quality of service of the uplink data packet between the residential gateway and a user plane network element.

In a possible design, when the residential gateway determines, based on the first indication information and the first DSCP value, the QoS requirement corresponding to the first indication information and the first DSCP value, the residential gateway determines, based on the first indication information, a mapping relationship corresponding to the first indication information, where the mapping relationship is a mapping relationship between a DSCP value and a quality of service QoS requirement. The home network determines, based on the first DSCP value and the mapping relationship corresponding to the first indication information, the QoS requirement corresponding to the first DSCP value. The mapping relationship corresponding to the first indication information includes at least one mapping relationship.

According to the foregoing design, the residential gateway may determine, based on the first indication information, the mapping relationship corresponding to the first indication information, and determine, based on the first DSCP value and the mapping relationship, the QoS requirement corresponding to the first DSCP value.

In a possible design, the residential gateway receives at least one group of mapping relationships from a session management network element, where the at least one group of mapping relationships is in one-to-one correspondence with an identifier of at least one public land mobile network, and/or the at least one group of mapping relationships is in one-to-one correspondence with an IP address of at least one access network device, and each group of mapping relationships includes at least one mapping relationship. For example, the residential gateway receives a quality of service rule from the session management network element, where the quality of service rule includes the at least one group of mapping relationships.

When the residential gateway determines, based on the first indication information and the first DSCP value, the quality of service QoS requirement corresponding to the first indication information and the first DSCP value, the residential gateway determines, based on the first indication information, the first DSCP value, and the at least one group of mapping relationships, the quality of service QoS requirement corresponding to the first indication information and the first DSCP value.

For example, when the residential gateway determines, based on the first indication information, the mapping relationship corresponding to the first indication information, the residential gateway determines, based on the first indication information and the at least one group of mapping relationships, the mapping relationship corresponding to the first indication information. The home network determines, based on the first DSCP value and the mapping relationship corresponding to the first indication information, the QoS requirement corresponding to the first DSCP value.

According to the foregoing design, the residential gateway may obtain in advance the at least one group of mapping relationships and an identifier that is of a public land mobile network element or an IP address that is of an access network device and that corresponds to each group of mapping relationships, and further determine, based on the obtained at least one group of mapping relationships, the mapping relationship corresponding to the first indication information when receiving the first indication information.

In a possible design, the residential gateway sends second indication information to a session management network element, where the second indication information includes one or more of the identifier of the public land mobile network of the terminal device, the IP address of the first access network device, a first data network name, and first network slice selection assistance information, and the first data network name and/or the first network slice selection assistance information indicate/indicates the public land mobile network of the terminal device; and the residential gateway receives, from the session management network element, a mapping relationship corresponding to the second indication information. The mapping relationship corresponding to the second indication information includes at least one mapping relationship. For example, the residential gateway receives a quality of service rule from the session management network element, where the quality of service rule includes the mapping relationship corresponding to the second indication information.

When the residential gateway determines, based on the first indication information and the first DSCP value, the quality of service QoS requirement corresponding to the first indication information and the first DSCP value, the residential gateway determines, based on the first indication information, the first DSCP value, and the mapping relationship corresponding to the second indication information, the quality of service QoS requirement corresponding to the first indication information and the first DSCP value.

For example, when the residential gateway determines, based on the first indication information, the mapping relationship corresponding to the first indication information, the residential gateway determines, based on the first indication information and the mapping relationship corresponding to the second indication information, the mapping relationship corresponding to the first indication information. The home network determines, based on the first DSCP value and the mapping relationship corresponding to the first indication information, the QoS requirement corresponding to the first DSCP value.

According to the foregoing design, the residential gateway may request a mapping relationship from the session management network element. Specifically, the residential gateway may send the second indication information to the session management network element, to obtain the mapping relationship corresponding to the second indication information; and further determine, based on the obtained mapping relationship corresponding to the second indication information, the mapping relationship corresponding to the first indication information when receiving the first indication information.

In a possible design, before the residential gateway sends the second indication information to the session management network element, the residential gateway receives a first parameter from the terminal device, where the first parameter includes the identifier of the public land mobile network of the terminal device and/or an IP address of an access network device in the public land mobile network of the terminal device; and the residential gateway determines the second indication information based on the first parameter. For example, the second indication information includes the first parameter.

According to the foregoing design, the residential gateway may determine the second indication information based on the first parameter obtained from the terminal device.

In a possible design, the home network element determines that a mapping relationship corresponding to the first parameter is not stored.

According to a second aspect, this application provides a communication method. The method includes:
A residential gateway receives a packet including a DSCP value and a first IP address from a terminal device that accesses the residential gateway, where the first IP address is an IP address of an access network device. For example, the first IP address is an IP address of a 3GPP access network device, an IP address of a non-3GPP interworking function network element, or an IP address of a trusted non-3GPP gateway function network element. The residential gateway buffers the packet, and sends the DSCP value and the first IP address to a session management network element; the residential gateway receives, from the session management network element, a QoS requirement corresponding to the first IP address and the DSCP value; and the residential gateway sends the packet to a user plane network element based on the QoS requirement.

According to the foregoing design, the residential gateway may obtain, based on the DSCP value and the first IP address that are included in the uplink data packet received from the terminal device, the QoS requirement corresponding to the DSCP value and the first IP address, and further send the uplink data packet based on the QoS requirement. This can ensure quality of service of the uplink data packet between the residential gateway and the user plane network element.

In a possible design, before sending the DSCP value and the first IP address to the session management network element, the home network element determines that the QoS requirement corresponding to the first IP address and the DSCP value is not stored.

According to a third aspect, this application provides a communication method. The method includes: A core network element determines a mapping relationship between a DSCP value and a QoS requirement based on subscription information of a residential gateway; and the core network element sends the mapping relationship to the residential gateway.

According to the foregoing design, the core network element may determine the mapping relationship between the DSCP value and the QoS requirement based on the subscription information of the residential gateway, and notify the residential gateway of the mapping relationship, to ensure quality of service of an uplink data packet between the residential gateway and a user plane network element.

In a possible design, when the core network element determines the mapping relationship between the DSCP value and the QoS requirement based on the subscription information of the residential gateway, the core network element determines at least one group of mapping relationships based on the subscription information of the residential gateway, where the at least one group of mapping relationships is in one-to-one correspondence with an identifier of at least one public land mobile network, and/or the at least one group of mapping relationships is in one-to-one correspondence with an IP address of at least one access network device, and each group of mapping relationships includes at least one mapping relationship. When the core network element sends the mapping relationship to the residential gateway, the core network element sends the at least one group of mapping relationships to the residential gateway.

According to the foregoing design, the core network element determines, based on the subscription information of the residential gateway, the at least one group of mapping relationships and an identifier that is of a public land mobile network element or an IP address that is of an access network device and that corresponds to each group of mapping relationships.

In a possible design, the core network element is a session management network element in a public land mobile network of the residential gateway.

In a possible design, the core network element is a policy control network element in a public land mobile network of the residential gateway. When the core network element sends the mapping relationship to the residential gateway, the policy control network element sends the mapping relationship to the residential gateway via a session management network element.

In a possible design, before the core network element determines the mapping relationship between the DSCP value and the QoS requirement based on the subscription information of the residential gateway, the policy control network element receives a request message from an access and mobility management network element, where the request message is used to request a policy of the residential gateway that accesses the access and mobility management network element. When the core network element sends the mapping relationship to the residential gateway, the policy control network element sends the mapping relationship to the residential gateway via the access and mobility management network element.

According to a fourth aspect, this application provides a communication method. The method includes: A core network element obtains second indication information, where the second indication information includes one or more of an identifier of a public land mobile network of a terminal device, an IP address of a first access network device, a first data network name, and first network slice selection assistance information, and the first data network name and/or the first network slice selection assistance information indicate/indicates the public land mobile network of the terminal device; and the core network element sends a mapping relationship corresponding to the second indication information to a residential gateway, where the mapping relationship is a mapping relationship between a DSCP value and a QoS requirement.

According to the foregoing design, the core network element may obtain the second indication information from the residential gateway, determine, based on the second indication information, the mapping relationship corresponding to the second indication information, and notify the residential gateway of the mapping relationship corresponding to the second indication information, to ensure quality of service of an uplink data packet between the residential gateway and a user plane network element.

In a possible design, the core network element is a session management network element in a public land mobile network of the residential gateway.

In a possible design, the core network element is a policy control network element in a public land mobile network of the residential gateway. When the core network element sends the mapping relationship corresponding to the second indication information to the residential gateway, the policy control network element sends the mapping relationship corresponding to the second indication information to the residential gateway via a session management network element.

According to a fifth aspect, this application provides a communication method. The method includes: A core network element determines a mapping relationship between a DSCP value and a QoS requirement based on subscription information of a residential gateway, and sends the mapping relationship to the residential gateway. The residential gateway receives a packet from a terminal device that accesses the residential gateway, where the packet includes a first differentiated services code point DSCP value and first indication information, the first indication information includes an identifier of a public land mobile network of the terminal device or an IP address of a first access network device, and the first access network device is located in the public land mobile network of the terminal device; determines, based on the first indication information and the received mapping relationship, a mapping relationship corresponding to the first indication information; determines, based on the first DSCP value and the mapping relationship corresponding to the first indication information, a QoS requirement corresponding to the first DSCP value; and sends the packet to a user plane network element based on the QoS requirement corresponding to the first DSCP value.

According to a sixth aspect, this application provides a communication method. The method includes: A core network element obtains second indication information from a residential gateway, where the second indication information includes one or more of an identifier of a public land mobile network of a terminal device, an IP address of a first access network device, a first data network name, and first network slice selection assistance information, and the first data network name and/or the first network slice selection assistance information indicate/indicates the public land mobile network of the terminal device; and sends a mapping relationship corresponding to the second indication information to the residential gateway, where the mapping relationship is a mapping relationship between a DSCP value and a QoS requirement. The residential gateway receives a packet from the terminal device that accesses the residential gateway, where the packet includes a first differentiated services code point DSCP value and first indication information, the first indication information includes the identifier of the public land mobile network of the terminal device or the IP address of the first access network device, and the first access network device is located in the public land mobile network of the terminal device; determines, based on the first indication information and the received mapping relationship corresponding to the second indication information, a mapping relationship corresponding to the first indication information; determines, based on the first DSCP value and the mapping relationship corresponding to the first indication information, a QoS requirement corresponding to the first DSCP value; and sends the packet to a user plane network element based on the QoS requirement corresponding to the first DSCP value.

According to a seventh aspect, this application provides a communication method. The method includes:
A session management network element receives first information from a user plane network element, where the first information includes an IP address carried in a packet detected by the user plane network element; and the session management network element obtains a mapping relationship corresponding to the IP address based on the IP address, where the mapping relationship is a mapping relationship between a DSCP value and a QoS requirement. The mapping relationship corresponding to the IP address includes at least one mapping relationship. The session management network element sends the mapping relationship corresponding to the IP address to a residential gateway.

According to the foregoing design, the user plane network element triggers the session management network element to send the mapping relationship to the residential gateway. To be specific, when detecting a downlink data packet, the user plane network element triggers the session management network element to obtain a mapping relationship corresponding to an IP address that is of an access network device and that is in the downlink data packet. Further, when a terminal device sends an uplink data packet including the IP address, the residential gateway may determine a corresponding QoS requirement based on the obtained mapping relationship, and send the uplink data packet based on the QoS requirement, to ensure quality of service of the uplink data packet between the residential gateway and the user plane network element.

In a possible design, the IP address is an IP address of an access network device in a public land mobile network of the terminal device, and the terminal device accesses the residential gateway.

In a possible design, the session management network element sends the IP address to a policy control network element; and
receives a mapping relationship corresponding to the IP address from the policy control network element, where the mapping relationship corresponding to the IP address may be carried in a PCC rule.

According to an eighth aspect, a communication method is provided. The method includes:
A session management network element receives second information from a user plane network element, where the second information includes an IP address and a DSCP value that are carried in a packet detected by the user plane network element; the session management network element obtains, based on the IP address and the DSCP value, a QoS requirement corresponding to the IP address and the DSCP value; and the session management network element sends the QoS requirement corresponding to the IP address and the DSCP value to a residential gateway.

According to the foregoing design, when the user plane network element detects the downlink data packet including the IP address and the DSCP value, the session management network element is triggered to obtain the QoS requirement corresponding to the IP address and the DSCP value. Further, when a terminal device sends an uplink data packet including the IP address and the DSCP value, the residential gateway may send the uplink data packet based on the corresponding QoS requirement, to ensure quality of service of the uplink data packet between the residential gateway and the user plane network element.

In a possible design, the IP address is an IP address of an access network device in a public land mobile network of the terminal device, and the terminal device accesses the residential gateway.

In a possible design, the session management network element sends the IP address and the DSCP value to a policy control network element; and receives, from the policy control network element, a QoS requirement corresponding to the IP address and the DSCP value, where the QoS requirement corresponding to the IP address and the DSCP value may be carried in a PCC rule.

According to a ninth aspect, this application further provides an apparatus. The apparatus may perform the foregoing method design. The apparatus may be a chip or a circuit that can perform functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The functions may be implemented by hardware, or may be implemented by executing corresponding software by hardware. The hardware or the software includes one or more units that correspond to the foregoing functions.

According to a tenth aspect, this application provides a computer-readable storage medium. The computer-readable storage medium stores a computer program. When the computer program is run on an apparatus, the method in any one of the foregoing possible designs is performed.

According to an eleventh aspect, this application provides a computer program product. The computer program product includes a computer program. When the computer program is run on an apparatus, the method in any one of the foregoing possible designs is performed.

According to a twelfth aspect, this application provides a communication system. The system includes a residential gateway and a core network element. The residential gateway is configured to perform the method in any one of the possible designs of the first aspect and the second aspect, and the core network element is configured to perform the method in any one of the possible designs of the third aspect and the fourth aspect.

In a possible design, the system further includes a terminal device, and the terminal device is configured to send a packet to the residential gateway.

In a possible design, the core network element is a session management network element in a public land mobile network of the residential gateway or a policy control network element in the public land mobile network of the residential gateway.

In this application, based on the implementations provided in the foregoing aspects, the implementations may be further combined to provide more implementations.

### BRIEF DESCRIPTION OF DRAWINGS

FIG. 1 is a diagram of an architecture of a mobile communication system to which this application is applied;
FIG. 2 is a diagram in which UE accesses a 5G network via an SNPN according to an embodiment of this application;
FIG. 3A is a diagram in which UE that accesses an RG accesses a 5G network by using an untrusted non-3GPP technology according to an embodiment of this application;
FIG. 3B is a diagram in which UE that accesses an RG accesses a 5G network by using a trusted non-3GPP technology according to an embodiment of this application;
FIG. 4 is a first overview flowchart of a communication method according to an embodiment of this application;
FIG. 5 is a second overview flowchart of a communication method according to an embodiment of this application;
FIG. 6 is a third overview flowchart of a communication method according to an embodiment of this application;
FIG. 7 is a first specific flowchart of obtaining a mapping relationship by a residential gateway according to an embodiment of this application;
FIG. 8A and FIG. 8B are a second specific flowchart of obtaining a mapping relationship by a residential gateway according to an embodiment of this application;
FIG. 9A and FIG. 9B are a third specific flowchart of obtaining a mapping relationship by a residential gateway according to an embodiment of this application;
FIG. 10A and FIG. 10B are a fourth specific flowchart of obtaining a mapping relationship by a residential gateway according to an embodiment of this application;
FIG. 11A and FIG. 11B are a fifth specific flowchart of obtaining a mapping relationship by a residential gateway according to an embodiment of this application;
FIG. 12A and FIG. 12B are a sixth specific flowchart of obtaining a mapping relationship by a residential gateway according to an embodiment of this application;
FIG. 13 is a first diagram of a structure of a communication apparatus according to an embodiment of this application; and
FIG. 14 is a second diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application.

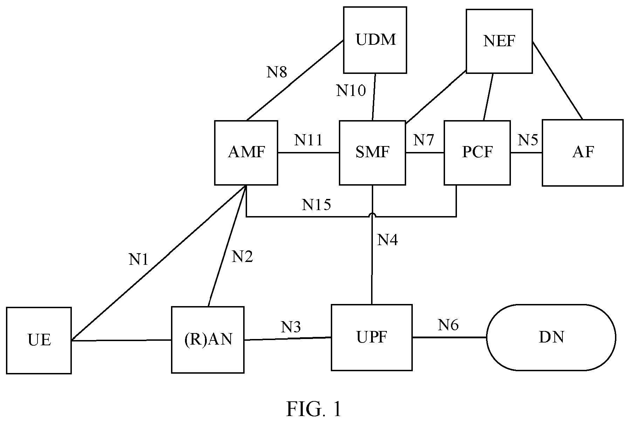

FIG. 1 is a diagram of an architecture of a mobile communication system to which an embodiment of this application is applied. The communication system includes a terminal device (for example, user equipment (user equipment, UE)), a network device (for example, an access network (access network, AN) device or a radio access network (radio access network, RAN) device, where the following uses the RAN as an example for description), a core network (Core network, CN), and a data network (data network, DN). Logically, network elements of the core network may be divided into two parts: a user plane and a control plane. The control plane is responsible for mobile network management, and the user plane is responsible for service data transmission.

The following briefly describes functions of the devices in FIG. 1.

The terminal device is an entrance for interaction between a mobile user and a network, and can provide a basic computing capability and a storage capability, display a service window to the user, and receive a user operation input. A next generation terminal device (NextGen UE) may establish a signal connection and a data connection to the RAN by using a new radio technology, to transmit a control signal and service data to the mobile network. The terminal device may include various handheld devices, vehicle-mounted devices, wearable devices, or computing devices that have a wireless communication function, other processing devices connected to a wireless modem, and various forms of terminals, such as mobile stations (mobile stations, MSs), terminals (terminals), and soft terminals, for example, water meters, electricity meters, and sensors.

The RAN is deployed near the terminal device, provides a network access function for an authorized user in a specific area, and can determine transmission tunnels of different quality based on a user level, a service requirement, and the like to transmit user data. The RAN can manage resources of the RAN, properly use the resources, provide an access service for the terminal device as required, and is responsible for forwarding the control signal and the user data between the terminal device and the core network.

The core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device is detached; and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device.

The data network (data network, DN) is a data network that provides a service for a user. Generally, a client is located in the terminal device, and a server is located in the data network. The data network may be a private network, for example, a local area network, or may be an external network that is not managed or controlled by an operator, for example, the Internet (Internet), or may be a dedicated network jointly deployed by operators, for example, a network that provides an IP multimedia network subsystem (IP multimedia core network subsystem, IMS) service.

The core network user plane includes a user plane function (user plane function, UPF). The core network control plane includes an access and mobility management function (access and mobility management function, AMF), a session management function (session management function, SMF), a unified data management (unified data management, UDM), a policy control function (policy control function, PCF), an application function (application function, AF), and a network exposure function (network exposure function, NEF).

The core network control plane uses a service-based architecture. Control plane network elements interact with each other in a service invoking manner to replace a point-to-point communication manner in a conventional architecture. In the service-based architecture, the control plane network element exposes a service to another control plane network element, so that the another control plane network element invokes the service. In point-to-point communication, a communication interface between control plane network elements stores a set of specific messages, and the messages can be used only by control plane network elements at two ends of the interface during communication.

The following briefly describes functions of functional entities in the core network.
1. A session management network element is mainly configured to: manage a session, allocate and manage an IP address of a terminal device, select an endpoint that can manage a user equipment plane function interface and a policy control or charging function interface, perform downlink data notification, and the like. In 5G communication, the session management network element may be an SMF network element. In future communication such as 6G communication, the session management function network element may still be the SMF network element or have another name. This is not limited in this application. Nsmf is a service-based interface provided by the SMF. The SMF may communicate with another network function through Nsmf.
2. An access management network element is mainly used for mobility management, access management, and the like. For example, the access management network element may be a mobility management entity (mobility management entity, MME) function in a 4G communication network or an AMF network element in a 5G network. In the future communication such as the 6G communication, the access management network element may still be the AMF network element or have another name. This is not limited in this application. Namf is a service-based interface provided by the AMF. The AMF may communicate with another network function through Namf.
3. A policy control network element is configured to guide a unified policy framework for network behavior, and provide policy rule information and the like for a control plane function network element (for example, the AMF or the SMF). In the 5G communication, the policy control network element may be a PCF network element. In the future communication such as the 6G communication, the policy control network element may still be the PCF network element or have another name. This is not limited in this application. Npcf is a service-based interface provided by the PCF. The PCF may communicate with another network function through Npcf.
4. A data management network element is used for user identifier processing, subscription, access authentication, registration, mobility management, or the like. In the 5G communication, the data management network element may be a UDM network element. In the future communication such as the 6G communication, the data management network element may still be the UDM network element or have another name. This is not limited in this application. Nudm is a service-based interface provided by the UDM. The UDM may communicate with another network function through Nudm.
5. An application network element is configured to: perform application-affected data routing, access a network exposure function, interact with a policy framework to perform policy control, or the like. In the 5G communication, the application network element may be an AF network element. In the future communication such as the 6G communication, the application network element may still be the AF network element or have another name. This is not limited in this application. Naf is a service-based interface provided by the AF. The AF may communicate with another network function through Naf.
6. A user plane network element is configured to perform packet routing and forwarding, quality of service (quality of service, QoS) processing of user plane data, or the like. In the 5G communication, the user plane network element may be a user plane function network element. In the future communication such as the 6G communication, the user plane network element may still be the UPF network element or have another name. This is not limited in this application.
7. A network exposure function network element is configured to securely expose, to the outside, a service, a capability, and the like that are provided by a 3GPP network function. In the 5G communication, the network capability exposure network element may be an NEF network element. In the future communication such as the 6G communication, the network capability exposure network element may still be the NEF network element or have another name. This is not limited in this application. Nnef is a service-based interface provided by the NEF. The NEF may communicate with another network function through Nnef.

It may be understood that FIG. 1 is merely an example, and the core network may further include more or fewer network elements. This is not limited in this application.

For ease of understanding of embodiments of this application, several basic concepts in embodiments of this application are briefly described.

### 1. QoS-related concepts

A QoS model of a 5G network is based on a QoS flow. The QoS model of the 5G network supports both guaranteed bit rate flow (GBR QoS Flow) and non-guaranteed bit rate flow (Non-GBR QoS Flow). The GBR QoS flow requires the network to provide a guaranteed flow bit rate, and the non-GBR QoS flow does not require the network to provide the guaranteed flow bit rate.

A QoS flow is a finest granularity for distinguishing between different QoS in a protocol data unit (protocol data unit, PDU) session. In a 5G system, a quality of service flow identifier (QoS flow ID, QFI) may be used to define a QoS flow. In one PDU session, user plane traffic with a same QFI may use a same traffic forwarding processing manner, for example, a scheduling priority and a permission threshold. The QFI is encapsulated in a packet header of an N3 or N9 channel, and is unique in a PDU session.

For example, the 5G network implements a feature of a corresponding QoS flow in the PDU session by using three configuration rules, including a QoS profile delivered to an AN, one or more QoS rules delivered to a UE, one or more packet detection rules (packet detection rules, PDRs) delivered to the UPF, a corresponding buffering action rule (buffering action rule, BAR), a forwarding action rule (forwarding action rule, FAR), a QoS enforcement rule (QoS enforcement rule, QER), and a usage reporting rule (usage reporting rule, URR). The PDR is a processing policy for different packets. The BAR is used to perform a buffering action on a packet. The FAR is used to perform a forwarding action on a packet. The QER is used to perform a flow control action. The URR is used to perform a statistics reporting action.

The QoS profile includes at least a 5G QoS identifier (5G QoS identifier, 5QI) and an allocation and retention priority (allocation and retention priority, ARP). If the QoS flow is a non-GBR QoS flow, a reflective QoS attribute (reflective QoS attribute, RQA) is further included. If the QoS flow is a GBR QoS flow, a guaranteed flow bit rate and a maximum flow bit rate are further included, and notification control and a maximum packet loss rate may be further included.

The QoS rule includes a QFI of an associated QoS flow, a packet filter set, and a priority value of a corresponding rule. The UE determines the QFI by using the packet filter set.

In the PDR rule, packet detection information (packet detection information, PDI) is associated and combined with the FAR, the QER, and the like. The PDI is used to identify one or more packets. In the FAR, a transport layer mark may be further indicated. If the transport layer mark is indicated, the UPF may further determine a QoS requirement of a packet with reference to a DSCP value in a packet header.

Different QoS flows and corresponding QFIs are allocated to different service flows, so that network differentiation can be implemented for different services.

### 2. Concepts related to a DSCP value

The UPF can map a DSCP value in an outer IP packet header to a corresponding QoS requirement, for example, the 5QI and the ARP, according to a specific mapping rule. A mapping relationship between the DSCP value and the QoS requirement may be separately indicated by an SMF to the UE and the UPF by using a QoS rule and a PDR rule.

For example, a N3IWF or a TNGF may alternatively map different QoS requirements to DSCP values, and create a corresponding child security association (child security association, child SA). When creating the child SA, the UE may learn of a mapping relationship between a corresponding DSCP value and a QoS requirement.

In a process of establishing or modifying an untrusted non-3GPP session, when creating a child SA, the N3IWF may alternatively instruct the UE to mark a corresponding DSCP value in a packet header of each IP data packet carried on the child SA. A topology position type of the N3IWF in an untrusted non-3GPP is equivalent to a topology position of a RAN in a 3GPP. The child SA of the N3IWF may be used to distinguish between different QoS, and may be determined by the N3IWF, or a plurality of QoS flows may be carried on a same child SA. For a feasible non-3GPP session, the TNGF (whose topology position is similar to the N3IWF) may choose to mark a corresponding DSCP value on a packet header of each IP data packet on the child SA.

It should be noted that, for specific content included in the QoS requirement, refer to various information related to the foregoing QoS profile.

### 3. Concepts related to a service level agreement (service level agreement, SLA)

The SLA is an agreement between a service provider and users, and defines a type of a service to be provided, quality of service, guaranty for performance and reliability of the service for the users, and the like.

One SLA may exist between two different PLMNs or between two different operators, and is used to specify a unified standard and a related rule. For example, a mapping relationship between a DSCP value and a QoS requirement may be consistent between different PLMNs or different operators by using a same SLA. In addition, the SLA may further provide other additional information across PLMNs and operators, such as access permission and a forwarding rule of a specific terminal.

### 4: Architecture in which UE accesses a network via a standalone non-public network (standalone non-public network, SNPN)

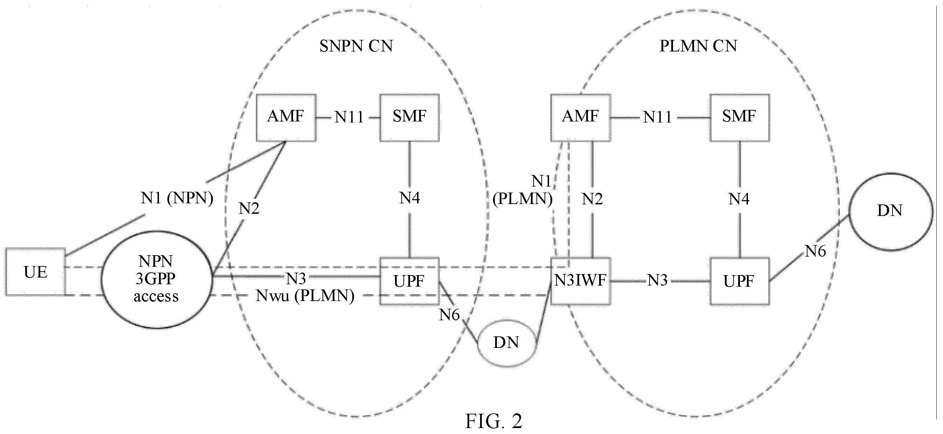

FIG. 2 is a diagram in which UE accesses a 5G network via an SNPN. In this architecture, an underlay network (SNPN) and an overlay network (PLMN) may be managed by a same SLA. SLA information corresponding to the SLA includes a mapping relationship between a DSCP value of a user plane internet protocol security (internet protocol security, IPsec) child SA and a QoS requirement, and may further include an IP address of an N3IWF in the overlay network. The mapping relationship between the DSCP value and the QoS requirement may be preconfigured on the N3IWF in the overlay network and an SMF and/or a PCF in the underlay network. When the UE establishes an IPsec connection to the N3IWF in the overlay network, a child SA connection is established for each QoS flow (where a plurality of QoS flows may correspond to one child SA), and a corresponding DSCP value is marked on each child SA connection. Therefore, after a session in the overlay network is established, the UE may also learn of the mapping relationship between the DSCP value and the QoS requirement in a current PDU session.

In addition, an SMF and/or a PCF in the overlay network may deliver or configure a PDR and/or an URR in the PDU session to a UPF, where the PDR and/or the URR include/includes the IP address of the N3IWF and a mapping relationship between a DSCP value corresponding to the IP address of the N3IWF and a QoS requirement. Therefore, the UPF may also determine a QoS requirement of a packet based on the mapping relationship between the DSCP value and the QoS requirement, to ensure that QoS requirements of a downlink packet in the underlay network and the overlay network are consistent. For an uplink packet, because the UE learns of a corresponding mapping relationship via the N3IWF when establishing an overlay network session, the UE also adds a DSCP value of a corresponding QoS to a packet header when sending the packet.

Embodiments of this application are applied to an architecture in which UE accesses a network via a residential gateway (residential gateway, RG).

The RG may also be referred to as a residential gateway. As a special terminal, the RG may also access a 5G core network in a 5G network by using a corresponding access technology and an access network device. The RG may alternatively be a 5G-RG (5G residential gateway), a fixed network residential gateway (fixed network RG, FN-RG), a fixed network broadband residential gateway (fixed network broadband RG, FN-BRG), or a fixed network cable residential gateway (fixed network cable RG, FN-CRG).

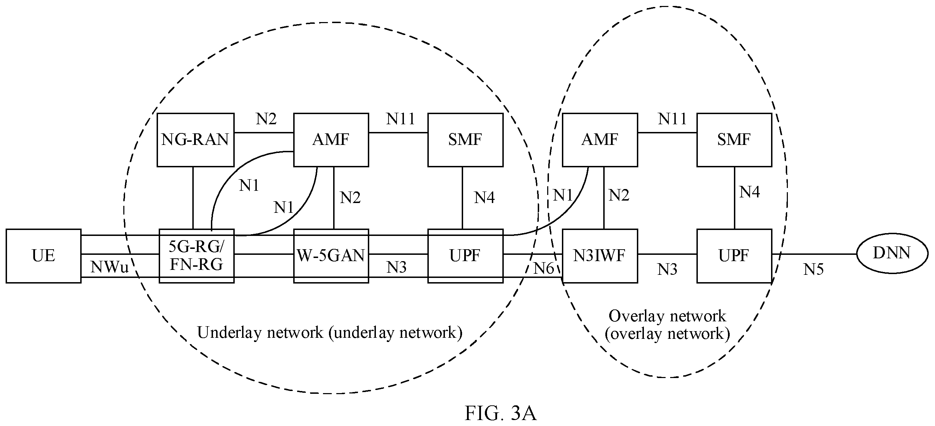

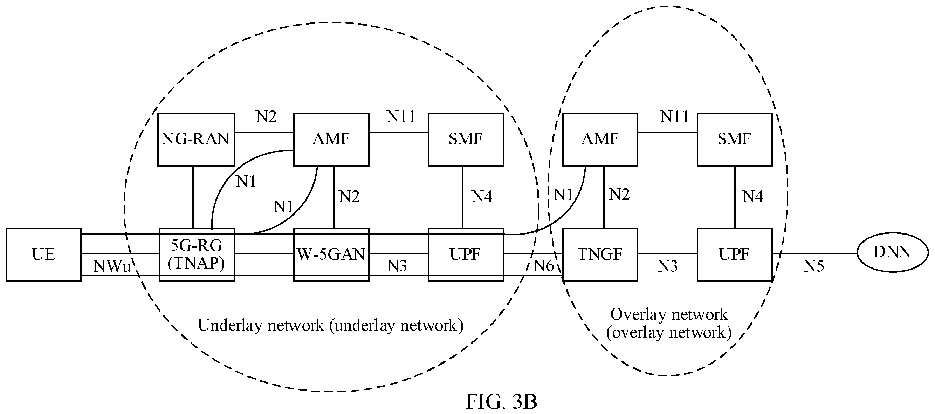

A topology position of a wireline 5G access network (wireline 5G access network, W-5GAN) in a wired access technology is equivalent to a topology position of a N3IWF and a TNGF in a non-3GPP access technology, and is also equivalent to a topology position of a RAN in a 3GPP access technology. In addition, UE behind the RG may access the 5G core network via the RG. FIG. 3A and FIG. 3B are diagrams of two architectures in which the UE accesses the 5G network via the RG. The UE behind the RG may also be referred to as UE that accesses the RG.

FIG. 3A is a diagram in which the UE that accesses the RG accesses the 5G network by using an untrusted non-3GPP technology.

The UE accesses the 5G network via the RG by using the untrusted non-3GPP technology. From the perspective of a PLMN of the UE, a PLMN in which the RG is located is used as the untrusted non-3GPP access network of the UE. The UE and the N3IWF are connected through an NWu interface, and data signaling between interfaces is carried in a PDU session of the RG in the PLMN in which the RG is located. From the perspective of the PLMN of the RG, the PLMN in which the UE is located is used as a data network of the RG, and an address of the N3IWF is used as a destination address of a PDU session that is of the RG and that carries data signaling of the UE. An underlay network is the PLMN network in which the RG is located, and an overlay network is a network to which the UE is connected by using the PLMN network of the RG.

The PLMN of the underlay network and the PLMN of the overlay network may be the same or different, and operators to which the underlay network and the overlay network belong may be the same or different. When the PLMN of the underlay network is different from the overlay network or the underlay network and the overlay network belong to different operators, the underlay network and the overlay network may be managed by using a same SLA, to ensure that a mapping relationship between a DSCP value and a QoS requirement in the overlay network and the underlay network is consistent. Therefore, a QoS requirement of a data packet in the overlay network may be mapped to a DSCP value in an IP packet header via the N3IWF, and a UPF in the underlay network converts the DSCP value in the packet header of the received data packet into the QoS requirement in the underlay network according to a corresponding mapping rule. In this method, QoS collaboration between the underlay network and the overlay network can be implemented, to ensure that a data flow of the UE has same QoS quality of service when accessing the network of the UE by using the PLMN of the RG.

That the UPF in the underlay network converts the DSCP value in the packet header of the received downlink data packet into the QoS requirement in the underlay network according to the corresponding mapping rule specifically means determining a corresponding QFI, and encapsulating the QFI in the packet header of the data packet. The packet header is not a packet header at an IP layer, but a packet header of a GPRS tunneling protocol for the user plane (GPRS tunneling protocol for the user plane, GTP-U), and is located below the IP layer. After receiving the downlink data packet from the UPF, a base station (for example, a 5G access network (NG-RAN)) or a W-5GAN in the underlay network allocates a corresponding radio resource to the packet based on the QFI in GTP-U, and sends the packet to the UE.

However, the foregoing technology can only ensure a QoS requirement of a downlink data packet of the UE, and cannot ensure that a QoS requirement in the overlay network is the same as a QoS requirement in the underlay network for an uplink data packet of the UE, thereby affecting quality of service.

FIG. 3B is a diagram in which the UE that accesses the RG accesses the 5G network by using a trusted non-3GPP.

FIG. 3B is similar to FIG. 3A. The UE accesses the 5G network via the RG by using the trusted non-3GPP technology. A trusted non-3GPP access point (trusted non-3GPP access point, TNAP) of the underlay network and a TNGF of the overlay network generally belong to a same operator, that is, are managed by using a same SLA. The foregoing analysis is also applicable to this architecture, and a QoS requirement of a downlink data packet of the UE cannot be ensured either.

It should be noted that, for FIG. 3A and FIG. 3B, locations of the NG-RAN and the W-5GAN may be interchanged. This is not limited in this application.

The mapping relationship in embodiments of this application is a mapping relationship between a DSCP value and a QoS requirement. The SLA information may include at least one mapping relationship between a DSCP value and a QoS requirement. For example, the SLA information may include a mapping relationship corresponding to a specific PLMN or a mapping relationship corresponding to a specific IP address. There may be one or more mapping relationships corresponding to the specific PLMN, and there may be one or more mapping relationships corresponding to the specific IP address, where the specific IP address may be an IP address of an access network device. For example, the access network device may be a 3GPP access network device, or may be a non-3GPP access network device. The non-3GPP access network device may be an N3IWF, a TNGF, or the like.

It may be understood that a mapping relationship corresponding to a PLMN 1, a mapping relationship corresponding to a PLMN 2, and a mapping relationship corresponding to a PLMN 3 may all include a QoS requirement corresponding to a DSCP value. However, for different PLMNs, the QoS requirement may be the same or may be different. In other words, mapping relationships corresponding to different PLMNs may include a mapping relationship between a same DSCP value and a QoS requirement, but specific QoS requirements may be the same or different.

For example, the SLA information may alternatively be implemented by enhancing an existing rule. For example, for a residential gateway, a QoS rule received in the conventional technology does not include a mapping relationship between a DSCP value and a QoS requirement, additional information may need to be added inside or outside the QoS rule to indicate the mapping relationship between the DSCP value and the QoS requirement. For example, an additional DSCP value is added to a packet filter (packet filter) in the QoS rule, or the QoS rule is associated with the DSCP value, so that mapping between the DSCP value and the QoS requirement is implemented. In addition, corresponding PLMN information or a corresponding IP address may be further added inside the QoS rule or outside the QoS rule.

For example, the SLA information may further include access control information, for example, one or more of a series of information such as whether the residential gateway allows the UE behind the residential gateway to access a specific N3IWF/TNGF address, how to map a relationship between the UE and a data network name (data network name, DNN) or single network slice selection assistance information (single network slice selection assistance information, S-NSSAI) used by the residential gateway, and how to configure different user route selection policies for the UE (UE route selection policies, URSPs).

The SLA information may be at a granularity of single UE. For example, corresponding access control information and mapping information between a DSCP value and a QoS requirement are configured based on a specific UE identifier. For example, identification information of the UE is additionally carried in the SLA information. Alternatively, an identifier of a PLMN may be used as a granularity. For example, corresponding access control information and mapping information between a DSCP value and a QoS requirement are configured based on a specific PLMN. For example, information about the PLMN is additionally carried in the SLA information. Alternatively, an IP address may be used as a granularity. For example, corresponding access control information and mapping information between a DSCP value and a QoS requirement may be configured based on a specific IP address. For example, information about the IP address is additionally carried in the SLA information.

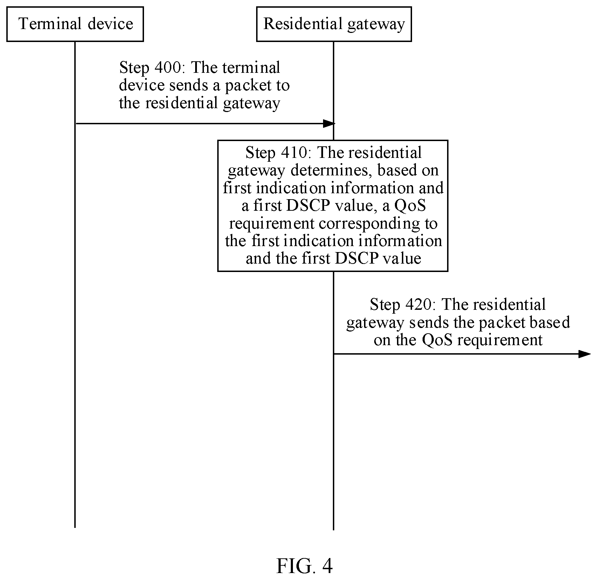

Based on this, this application provides a communication method, to ensure quality of service of an uplink data packet between a residential gateway and a user plane network element. As shown in FIG. 4, the method includes the following steps.

Step 400: A terminal device sends a packet to the residential gateway.

For example, the packet includes a first DSCP value and first indication information, the first indication information includes an identifier of a PLMN of the terminal device or an IP address of a first access network device, and the first access network device is located in the PLMN of the terminal device.

It should be noted that the terminal device accesses the residential gateway. The residential gateway herein may be an RG, as shown in FIG. 3A or FIG. 3B. The PLMN of the terminal device is a PLMN accessed by the terminal device via the residential gateway.

Step 410: The residential gateway determines, based on the first indication information and the first DSCP value, a QoS requirement corresponding to the first indication information and the first DSCP value.

Example 1: The residential gateway may directly determine, based on the first indication information, the first DSCP value, and obtained at least one mapping relationship, the QoS requirement corresponding to the first indication information and the first DSCP value. The mapping relationship is a mapping relationship between a DSCP value and a QoS requirement, and the mapping relationship corresponds to the identifier of the PLMN or the IP address of the access network device.

Example 2: The residential gateway may determine, based on the first indication information, a mapping relationship corresponding to the first indication information, where the mapping relationship is a mapping relationship between a DSCP value and a QoS requirement. The mapping relationship corresponding to the first indication information includes at least one mapping relationship. Further, the home network determines, based on the first DSCP value and the mapping relationship corresponding to the first indication information, the QoS requirement corresponding to the first DSCP value.

For example, because the mapping relationship corresponding to the first indication information includes at least one mapping relationship, for example, a list of a DSCP value and a QoS requirement, the residential gateway may determine the QoS requirement corresponding to the first DSCP value in the list.

For example, the residential gateway obtains the mapping relationship in the following possible implementations, and further determines, based on the first indication information, the mapping relationship corresponding to the first indication information. It may be understood that the following possible implementations of obtaining the mapping relationship are not only applicable to Example 2, but also applicable to Example 1.

Manner 1: The residential gateway preconfigures at least one group of mapping relationships. Further, the residential gateway may determine, based on the at least one group of preconfigured mapping relationships and the first indication information, the mapping relationship corresponding to the first indication information.

Each group of mapping relationships may include at least one mapping relationship. Each group of mapping relationships corresponds to one PLMN identifier, and/or each group of mapping relationships corresponds to one IP address. The IP address herein may be the IP address of the access network device.

It should be noted that the residential gateway may preconfigure a correspondence between the at least one group of mapping relationships and at least one PLMN identifier (or the IP address of the access network device).

For example, the residential gateway preconfigures three groups of mapping relationships: a mapping relationship corresponding to a PLMN 1, a mapping relationship corresponding to a PLMN 2, and a mapping relationship corresponding to a PLMN 3. The mapping relationship corresponding to the PLMN 1 includes one or more mapping relationships, the mapping relationship corresponding to the PLMN 2 includes one or more mapping relationships, and the mapping relationship corresponding to the PLMN 3 includes one or more mapping relationships. When the first indication information includes an identifier of the PLMN 1, the residential gateway may determine, based on the identifier of the PLMN 1, the mapping relationship corresponding to the PLMN 1 from the foregoing three groups of mapping relationships as the mapping relationship corresponding to the first information.

For example, a preconfiguration manner may be that the residential gateway is preconfigured manually, or is preconfigured upon delivery. In addition, the preconfiguration manner further includes that the residential gateway is remotely configured based on a non-3GPP standard (for example, TR-069 or TR-369) by using an auto-configuration server (auto-configuration server, ACS) server. For example, after establishing a user plane channel, the residential gateway may be connected to the ACS server, and the ACS delivers, via a user plane, at least one group of mapping relationships needed by the residential gateway.

In other words, in Manner 1, the residential gateway does not obtain the mapping relationship by using a signaling procedure of a 5G network.

In the following Manner 2 to Manner 5, the residential gateway obtains the mapping relationship by using the signaling procedure of the 5G network.

Manner 2: A core network element may determine at least one group of mapping relationships based on subscription information of the residential gateway, and notify the residential gateway of the at least one group of mapping relationships. Further, the residential gateway may determine, based on the received at least one group of mapping relationships and the first indication information, the mapping relationship corresponding to the first indication information.

Each group of mapping relationships may include at least one mapping relationship. Each group of mapping relationships corresponds to one PLMN identifier, and/or each group of mapping relationships corresponds to one IP address. The IP address herein may be the IP address of the access network device.

It should be noted that the core network element further sends a correspondence between the at least one group of mapping relationships and at least one PLMN identifier (or the IP address of the access network device) to the residential gateway.

It should be noted that, unless otherwise specified, the core network element in this application belongs to a PLMN network of the residential gateway. For example, as shown in FIG. 3A, the core network element is a core network element in the underlay network.

For example, the core network element may be a policy control network element.

Example 1: In a registration procedure of the residential gateway, an access and mobility management network element requests an association policy of the residential gateway from the policy control network element. The policy control network element may determine at least one group of mapping relationships based on the subscription information of the residential gateway, and send the at least one group of mapping relationships to the residential gateway via the access and mobility management network element.

Example 2: In a session procedure of the residential gateway, the policy control network element may determine at least one group of mapping relationships based on the subscription information of the residential gateway, and send the at least one group of mapping relationships to the residential gateway via a session management network element.

For example, the core network element may be a session management network element.

For example, in a session procedure of the residential gateway, the session management network element may determine at least one group of mapping relationships based on the subscription information of the residential gateway, and send the at least one group of mapping relationships to the residential gateway. For example, the session management network element sends a quality of service rule to the residential gateway, where the quality of service rule includes at least one group of mapping relationships.

It should be noted that the core network element may alternatively be an access and mobility management network element or another network element. This is not limited in this application.

Manner 3: The residential gateway may send a DNN and/or S-NSSAI in a session establishment process of the residential gateway, and a core network element may determine at least one group of mapping relationships based on the DNN and/or the S-NSSAI sent by the residential gateway. Further, the residential gateway may determine, based on the received at least one group of mapping relationships and the first indication information, the mapping relationship corresponding to the first indication information.

The DNN and/or the S-NSSAI indicate/indicates that the residential gateway needs to establish a special session, and the terminal device that accesses the residential gateway may establish a connection to the PLMN of the terminal device by using the session.

It should be noted that there may be one or more DNNs herein, and similarly, there may be one or more pieces of S-NSSAI. The one or more DNNs may indicate one or more PLMNs supported by the session, which may be described as one or more PLMNs that can be accessed by the terminal device by using the session. Similarly, the one or more pieces of S-NSSAI may indicate one or more PLMNs supported by the session, which may be described as one or more PLMNs that can be accessed by the terminal device by using the session.

In other words, there is a correspondence between the DNN and the PLMN, and there is a correspondence between the S-NSSAI and the PLMN. Further, the core network element may determine the at least one group of mapping relationships based on the one or more DNNs and/or the one or more pieces of S-NSSAI sent by the residential gateway. Each group of mapping relationships may include at least one mapping relationship, and each group of mapping relationships corresponds to one PLMN identifier.

For example, each group of mapping relationships may alternatively correspond to an IP address of an access network device in a corresponding PLMN. For example, each group of mapping relationships corresponds to an IP address of an N3IWF, or each group of mapping relationships corresponds to an IP address of a TNGF.

It should be noted that the core network element further sends a correspondence between the at least one group of mapping relationships and at least one PLMN identifier to the residential gateway.

For example, the core network element may be a policy control network element or a session management network element. This is not limited in this application. For example, the residential gateway receives a quality of service rule from the session management network element, where the quality of service rule includes at least one group of mapping relationships.

In addition, Manner 1 to Manner 3 may be combined with each other, in other words, the residential gateway may obtain at least one group of mapping relationships in at least one of the foregoing manners.

Manner 4: The residential gateway sends second indication information to a session management network element, where the second indication information is used to request a mapping relationship between a DSCP value and a QoS requirement, and the session management network element sends a mapping relationship corresponding to the second indication information to the residential gateway. For example, the residential gateway receives a quality of service rule from the session management network element, where the quality of service rule includes the mapping relationship corresponding to the second indication information. Further, the residential gateway may determine, based on the first indication information and the received mapping relationship corresponding to the second indication information, the mapping relationship corresponding to the first indication information.

In a possible implementation, the terminal device sends a first parameter to the residential gateway, where the first parameter includes the PLMN identifier of the terminal device and/or the IP address of the first access network device, and the first access network device is located in the PLMN of the terminal device, for example, located in the overlay network in FIG. 3A or FIG. 3B.

Further, the residential gateway generates the second indication information based on the first parameter. For example, the second indication information includes the first parameter. For example, the second indication information includes at least one of the PLMN identifier of the terminal device, the IP address of the first access network device, a DNN corresponding to the terminal device, or S-NSSAI corresponding to the terminal device. The DNN corresponding to the terminal device corresponds to the PLMN of the terminal device, or the S-NSSAI corresponding to the terminal device corresponds to the PLMN of the terminal device. For example, the residential gateway may determine, based on the PLMN that is of the terminal device and that is in the first parameter, the DNN corresponding to the terminal device or the S-NSSAI corresponding to the terminal device.

In addition, in a possible design, before the residential gateway generates the second indication information based on the first parameter, the residential gateway may further determine, based on the first parameter received from the terminal device, whether a mapping relationship corresponding to the first parameter is stored. If the mapping relationship corresponding to the first parameter has been stored, the second indication information does not need to be generated and sent. If the mapping relationship corresponding to the first parameter is not stored, the second indication information is generated and sent, in other words, a session update procedure is triggered.

After the session management network element receives the second indication information, the session management network element may determine, based on local configuration information and the second indication information, the mapping relationship corresponding to the second indication information.

Alternatively, after the session management network element receives the second indication information, the session management network element may send the second indication information to a policy control network element, and the policy control network element determines, based on local configuration information and the second indication information, the mapping relationship corresponding to the second indication information, and sends the mapping relationship corresponding to the second indication information to the residential gateway via the session management network element.

It should be noted that the mapping relationship corresponding to the second indication information includes at least one mapping relationship. Different from Manner 1 to Manner 3 in which the residential gateway may obtain mapping relationships respectively corresponding to a plurality of PLMNs, in this case, because the second indication information indicates only one PLMN, the mapping relationship corresponding to the second indication information is a mapping relationship corresponding to one PLMN; or because the second indication information indicates only one IP address, the mapping relationship corresponding to the second indication information is a mapping relationship corresponding to one IP address.

In addition, it may be understood that the PLMN indicated by the first indication information in step 400 is the same as the PLMN indicated by the second indication information. For example, a parameter included in the first indication information may be the same as a parameter included in the second indication information. Therefore, the mapping relationship corresponding to the first indication information is the same as the mapping relationship corresponding to the second indication information.

Manner 4 may be applied to a scenario in which the residential gateway does not obtain the at least one group of mapping relationships in any one or more of the foregoing three manners, or applied to a scenario in which the at least one group of mapping relationships obtained in any one or more of the foregoing three manners cannot meet a requirement. In this case, the residential gateway may trigger a session update procedure, to request to obtain a mapping relationship corresponding to the PLMN of the terminal device or a mapping relationship corresponding to the IP address of the access network device in the PLMN of the terminal device.

Manner 5: The residential gateway receives, from a session management network element, a mapping relationship corresponding to a first IP address, where the first IP address is an IP address of a packet detected by the user plane network element. For example, the IP address is the IP address of the access network device in the PLMN of the terminal device. Further, the residential gateway may determine, based on the first indication information and the received mapping relationship corresponding to the first IP address, the mapping relationship corresponding to the first indication information.

For example, when detecting the packet including the first IP address, the user plane network element sends the first IP address to the session management network element. Further, the session management network element may determine, based on local configuration information and the first IP address, the mapping relationship corresponding to the first IP address, and send the mapping relationship to the residential gateway. Alternatively, the session management network element sends the first IP address to a policy control network element, and the policy control network element may determine, based on local configuration information and the first IP address, the mapping relationship corresponding to the first IP address, and send the mapping relationship corresponding to the first IP address to the residential gateway via the session management network element.

It may be understood that, in Manner 5, the user plane network element triggers the session management network element to send the mapping relationship to the residential gateway. To be specific, when detecting a downlink data packet, the user plane network element triggers the session management network element to obtain a mapping relationship corresponding to an IP address that is of an access network device and that is in the downlink data packet. Further, when the terminal device sends an uplink data packet including the IP address, the residential gateway may determine a corresponding QoS requirement based on the obtained mapping relationship, to ensure quality of service of the uplink data packet between the residential gateway and the user plane network element in the underlay network.

Step 420: The residential gateway sends the packet based on the QoS requirement corresponding to the first DSCP value.

For example, with reference to FIG. 3A, the RG may determine a corresponding QFI based on the QoS requirement corresponding to the first DSCP value, and encapsulate the QFI in a packet header of the packet (where the packet header herein is not a packet header at an IP layer, but a packet header at a service data adaptation protocol (service data adaptation protocol, SDAP) layer on a wireless side, and may be understood as being below the IP layer). The RG may be connected to the UPF via the NG-RAN, or may be connected to the UPF via a W-AGF. When the RG is connected to the UPF via the NG-RAN, after receiving the packet, the NG-RAN parses the packet header at the SDAP layer to identify the QFI, re-encapsulates the QFI in the packet header at the SDAP layer into the packet header of the GTP-U, and sends the packet header to the UPF, and then the UPF parses the packet header to identify the QFI. In the entire process, the RG, the NG-RAN, and the UPF in the underlay network may all learn of the QFI of the packet, to provide a corresponding quality of service requirement for the data packet. When the RG is connected to the UPF via the W-5GAN, the wireline access gateway function (wireline access gateway function, W-AGF) may obtain, from the RG in another manner, the QFI corresponding to the packet, and provide a corresponding quality of service requirement. QFI information of the packet is still transmitted between the W-AGF and the UPF via a GTP-U layer through an N2 interface. The W-5GAN may include a wired access node and a 5G convergence adaptive function network element, and the 5G convergence adaptive function network element may be the W-AGF.

According to the foregoing design, when the terminal device sends the uplink data packet to the residential gateway, the residential gateway may determine the corresponding QoS requirement based on the obtained mapping relationship, to ensure the quality of service of the uplink data packet between the residential gateway and the user plane network element.

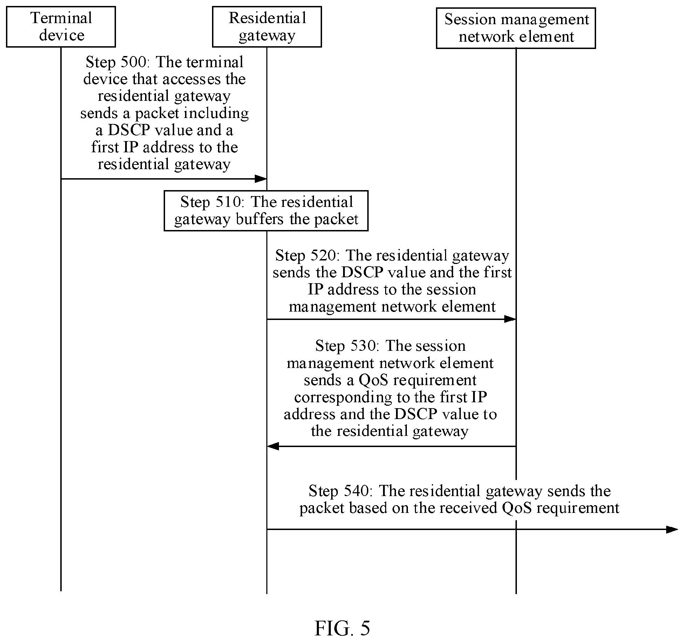

As shown in FIG. 5, this application further provides a communication method. The method includes the following steps.

Step 500: A terminal device that accesses a residential gateway sends a packet including a DSCP value and a first IP address to the residential gateway, where the first IP address is an IP address of an access network device. For example, the access network device may be a 3GPP access network device, or may be a non-3GPP access network device. The 3GPP access network device is used by the terminal device to access a network by using a 3GPP technology, and the non-3GPP access network device is used by the terminal device to access the network by using a non-3GPP technology. The non-3GPP access network device may be a non-3GPP interworking function network element or a trusted non-3GPP gateway function network element.

Step 510: The residential gateway buffers the packet.

Step 520: The residential gateway sends the DSCP value and the first IP address to a session management network element.

In a possible design, before sending the DSCP value and the first IP address to the session management network element, the home network element determines that a QoS requirement corresponding to the first IP address and the DSCP value is not stored.

Step 530: The session management network element sends the QoS requirement corresponding to the first IP address and the DSCP value to the residential gateway.

For example, the session management network element may determine, based on local configuration information, the first IP address, and the DSCP value, the QoS requirement corresponding to the first IP address and the DSCP value.

Alternatively, the session management network element sends the DSCP value and the first IP address to a policy control network element, and the policy control network element may determine, based on local configuration information, the first IP address, and the DSCP value, the QoS requirement corresponding to the first IP address and the DSCP value, and send the QoS requirement corresponding to the first IP address and the DSCP value to the residential gateway via the session management network element.

Step 540: The residential gateway sends the packet based on the received QoS requirement.

For details, refer to the related descriptions of step 420.

According to the foregoing design, when the terminal device sends the uplink data packet to the residential gateway, the residential gateway may obtain the QoS requirement corresponding to the IP address and the DSCP value that are in the uplink data packet, to ensure quality of service of the uplink data packet between the residential gateway and a user plane network element in the underlay network based on the QoS requirement.

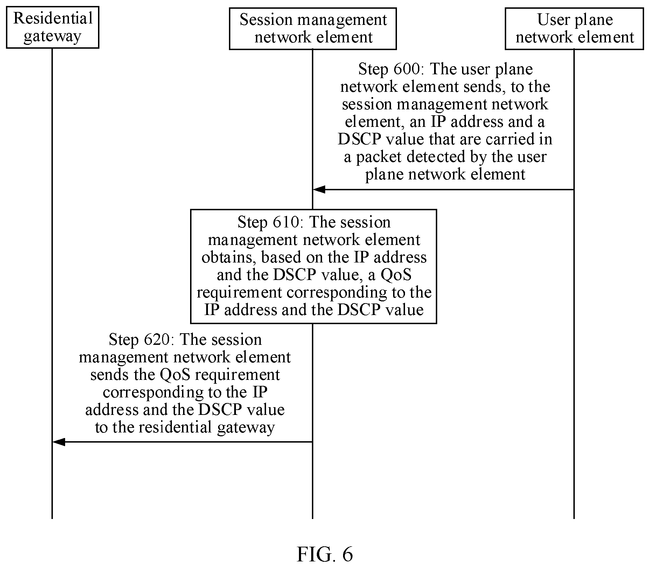

As shown in FIG. 6, this application further provides a communication method. The method includes the following steps.

Step 600: A user plane network element sends, to a session management network element, an IP address and a DSCP value that are carried in a packet detected by the user plane network element.

Step 610: The session management network element obtains, based on the IP address and the DSCP value, a QoS requirement corresponding to the IP address and the DSCP value.

For example, the session management network element may determine, based on local configuration information, the IP address, and the DSCP value, the QoS requirement corresponding to the IP address and the DSCP value.

Alternatively, the session management network element sends the DSCP value and the IP address to a policy control network element, and the policy control network element may determine, based on local configuration information, the DSCP value, and the IP address, the QoS requirement corresponding to the IP address and the DSCP value, and send the QoS requirement corresponding to the IP address and the DSCP value to the session management network element.

Step 620: The session management network element sends the QoS requirement corresponding to the IP address and the DSCP value to the residential gateway.

Different from Manner 1 to Manner 5, in this case, the residential gateway obtains a mapping relationship; and when receiving an uplink data packet including the IP address and the DSCP value, the residential gateway determines a corresponding QoS requirement based on the mapping relationship, to ensure quality of service of the uplink data packet between the residential gateway and the user plane network element in the underlay network.

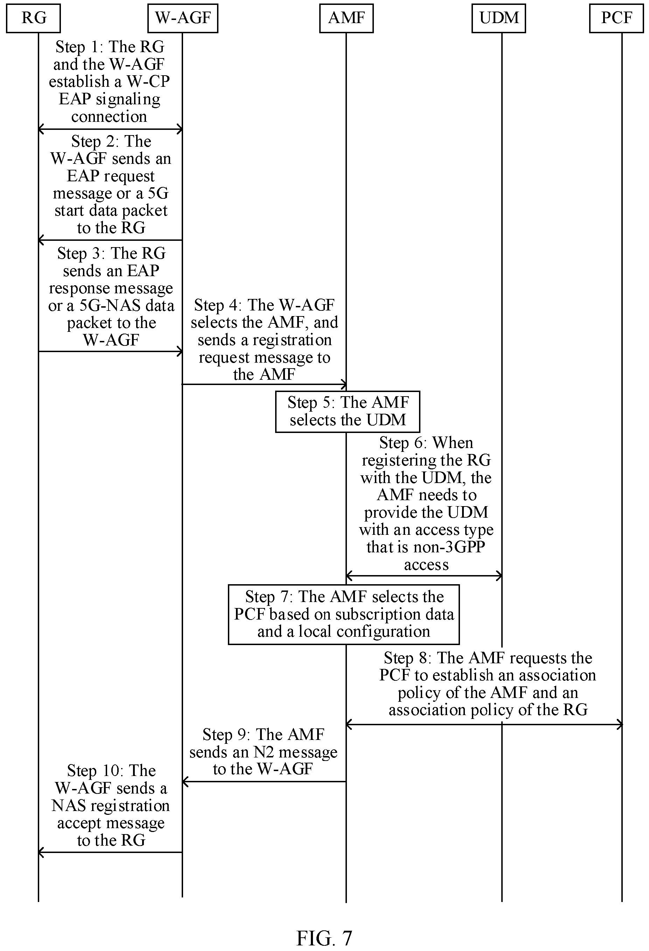

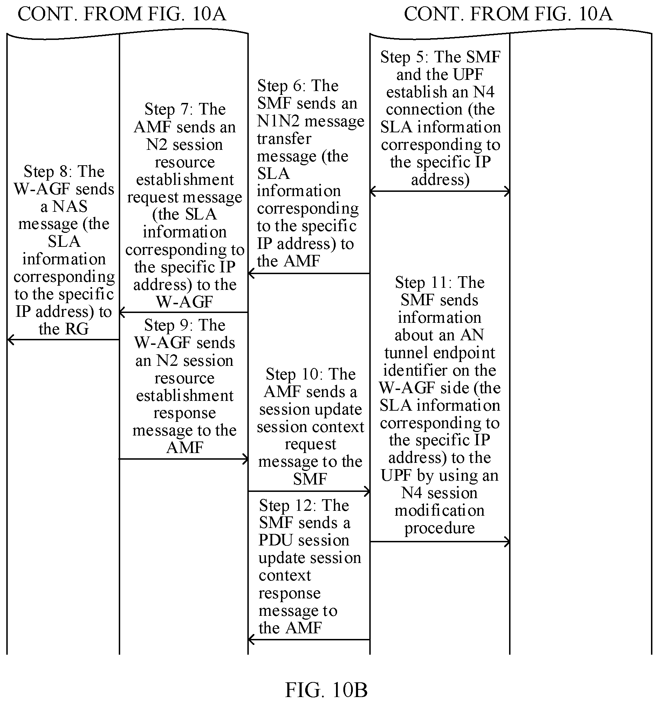

A process in which the residential gateway obtains the mapping relationship is described in detail in FIG. 7 to FIG. 10A and FIG. 10B. UE accesses an RG, the UE corresponds to the terminal device, the RG corresponds to the residential gateway, an SMF corresponds to the session management network element, a PCF corresponds to the policy control network element, and an AMF corresponds to the access and mobility management network element.

FIG. 7 shows a process in which the residential gateway obtains the mapping relationship in Manner 2.

FIG. 7 shows a registration procedure of the RG. It should be noted that the following procedure is not a complete registration procedure, and may further include another step.

Step 1: The RG and a W-AGF establish an extensible authentication protocol (extensible authentication protocol, EAP) signaling connection by using a wireline access control plane protocol (wireline access control plane protocol, W-CP).

Step 2: The W-AGF sends an EAP request (EAP-Request) message or a 5G start (5G-Start) data packet to the RG through the W-CP connection. The EAP request message or the 5G start data packet is used to instruct the UE to initiate an EAP-5G session, for example, instruct the RG to start to send a NAS message, where the NAS message is encapsulated in an EAP-5G data packet.

Step 3: The RG sends an EAP response (EAP-Response) message or a 5G-NAS data packet to the W-AGF. The EAP response message or the 5G-NAS data packet includes an AN parameter and a registration request message. The AN parameter includes parameter information, for example, a globally unique AMF identifier (globally unique AMF identifier, GUAMI) or a selected PLMN ID, used by the W-AGF to select the AMF.

Step 4: The W-AGF selects the AMF, and sends the registration request message to the AMF.

Step 5: The AMF selects a UDM.

Step 6: When registering the RG with the UDM, the AMF needs to provide the UDM with an access type (access type) that is non-3GPP access (Non-3GPP access).

In addition, the AMF determines, based on a node identifier of the W-AGF, that a radio access technology type (RAT type) is wired access.

Step 7: The AMF selects a PCF based on subscription data of the RG and a local configuration.

Step 8: The AMF requests the PCF to establish an association policy of the AMF and an association policy of the RG.

The PCF determines corresponding SLA information based on the subscription data of the RG and the local configuration, and delivers the SLA information to the AMF. The SLA information may be carried in the association policy of the RG. As described above, the SLA information may include access control information of the UE (for example, whether the RG is capable of allowing specific UE to access the RG, or has a capability of accessing a specific PLMN, or has a capability of accessing a specific IP address; or access control restriction information of the UE, for example, a time period in which specific UE or UE of a specific PLMN is allowed to perform access). The SLA information may alternatively include session information of the UE (for example, a mapping relationship between a DSCP value and a QoS requirement, or a condition for triggering a session modification procedure of the RG, for example, a specific DSCP value, IP address, or PLMN ID, or session modification indication information of the RG, used to carry corresponding indication information when the RG triggers session modification).

There are one or more pieces of SLA information, and the one or more pieces of SLA information are in one-to-one correspondence with one or more PLMNs, or the one or more pieces of SLA information are in one-to-one correspondence with an IP address of one or more access network devices.

Step 9: The AMF sends an N2 message to the W-AGF.

For example, the N2 message includes a NAS registration accept (NAS Registration Accept) message sent to the RG. The NAS registration accept message further includes one or more pieces of SLA information and a corresponding PLMN ID or IP address. In addition, the one or more pieces of SLA information may alternatively be generated by the AMF based on the local configuration and subscription information of the RG.

Step 10: The W-AGF sends the NAS registration accept message to the RG, where the NAS registration accept message includes the one or more pieces of SLA information and the corresponding PLMN ID or IP address.

According to the foregoing design, a core network element (for example, the PCF or the AMF) may determine the one or more pieces of SLA information based on the subscription data of the RG, and send the determined one or more pieces of SLA information to the RG.

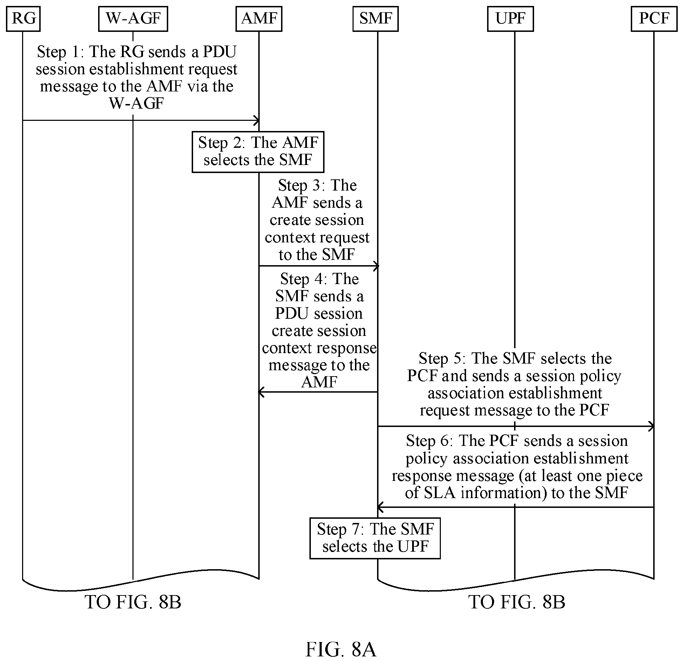

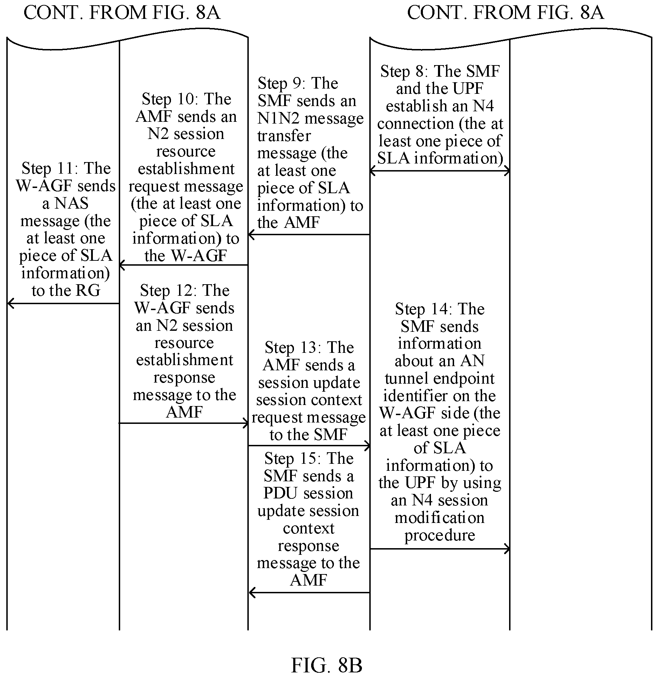

FIG. 8A and FIG. 8B show a process in which the residential gateway obtains the mapping relationship in Manner 3.

Step 1: After a W-CP EAP signaling connection is established between the RG and a W-AGF, the RG sends a PDU session establishment request message to the AMF via the W-AGF.

The PDU session establishment request message carries at least one DNN and/or at least one piece of S-NSSAI. The at least one DNN and/or the at least one piece of S-NSSAI indicate/indicates that the RG needs to establish a special session, and the UE that accesses the RG establishes a connection to a PLMN of the UE by using the session.

Step 2: The AMF selects the SMF.

For example, the AMF may select the SMF based on the at least one DNN and/or the at least one piece of S-NSSAI.

Step 3: The AMF sends a create session context request to the SMF.

For example, the create session context request includes at least one DNN and/or at least one piece of S-NSSAI.

Step 4: The SMF sends a PDU session create session context response message to the AMF.

Step 5: The SMF selects the PCF and sends a session policy association establishment request (SM policy association establishment request) message to the PCF.

Step 6: The PCF sends a session policy association establishment response (SM policy association establishment response) message to the SMF.

For example, the PCF determines at least one piece of SLA information based on the at least one DNN and/or the at least one piece of S-NSSAI, where the at least one piece of SLA information is in one-to-one correspondence with the at least one DNN and/or the at least one piece of S-NSSAI. Each piece of SLA information includes at least one mapping relationship between a DSCP value and a QoS requirement. The SLA information may further include other content. Details are not described herein.

For example, the PCF may alternatively determine at least one piece of SLA information based on subscription data of the RG and the at least one DNN and/or the at least one piece of S-NSSAI.

In addition, if the SMF does not send the session policy association establishment request to the PCF, the SMF may alternatively determine the at least one piece of SLA information based on at least one of local configuration information, the subscription data of the RG, and the at least one DNN and/or the at least one piece of S-NSSAI.

Step 7: The SMF selects a UPF.

Step 8: The SMF and the UPF establish an N4 connection.

Specifically, the SMF sends an N4 rule to the UPF.

For example, the N4 rule includes rules such as a PDR and an FAR. Optionally, the PDR and/or the FAR may include the at least one piece of SLA information.

Step 9: The SMF sends an N1N2 message transfer message to the AMF.

The N1N2 message transfer message is Namf_Communication_N1N2MessageTransfer. The message may include information such as a session identifier, N2 interface session management information (N2 SM information), and an N1 interface session management container (N1 SM Container).

The N2 interface session management information is sent by the SMF to the W-AGF via the AMF, and the N1 interface session management container is sent by the SMF to the RG via the AMF (for example, the AMF sends the N1 interface session management container to the RG by using a NAS message).

The N2 interface session management information includes information such as a tunnel endpoint identifier of the UPF, and the information is sent to the W-AGF, to notify the W-AGF of a destination address of an uplink data packet. The N1 interface session management container includes a PDU session establishment accept (PDU Session Establishment Accept) message. The PDU session establishment accept message further includes the at least one piece of SLA information.

Step 10: The AMF sends an N2 session resource establishment request message to the W-AGF.

For example, the N2 session resource establishment request message carries the N2 interface session management information and the NAS message that needs to be sent to the RG. The NAS message includes the session identifier and the N1 interface session management container.

Step 11: The W-AGF sends the NAS message to the RG.

In addition, before the W-AGF sends the NAS message to the RG, the W-AGF determines a wireline access user plane protocol (wireline access user plane protocol, W-UP) session resource that needs to be established.

For example, the W-AGF establishes a W-UP session resource between the W-AGF and the RG. After the W-UP session resource is established, the W-AGF sends the NAS message to the RG according to a W-CP.

Step 12: The W-AGF sends an N2 session resource establishment response message to the AMF.

For example, the N2 session resource establishment response message carries a tunnel endpoint identifier (which is subsequently sent to the UPF via the AMF and the SMF) on the W-AGF side. The tunnel endpoint identifier on the W-AGF side is used to notify the UPF of a destination address of a downlink data packet that passes through a 3GPP access path.

Step 13: The AMF sends a session update session context request message to the SMF.

For example, the session update session context request message includes information about an AN tunnel endpoint identifier on the W-AGF side.

Step 14: The SMF sends the information about the AN tunnel endpoint identifier on the W-AGF side to the UPF by using an N4 session modification procedure, where a PDR sent by the SMF to the UPF by using the N4 session modification procedure may optionally further include the at least one piece of SLA information. In other words, the SMF sends the at least one piece of SLA information to the UPF by using step 8 or step 14.

Step 15: The SMF sends a PDU session update session context response message to the AMF.

According to the foregoing design, a core network element (for example, the PCF) may determine the at least one piece of SLA information based on the at least one DNN and/or the at least one piece of S-NSSAI, and send the determined at least one piece of SLA information to the RG and the UPF.

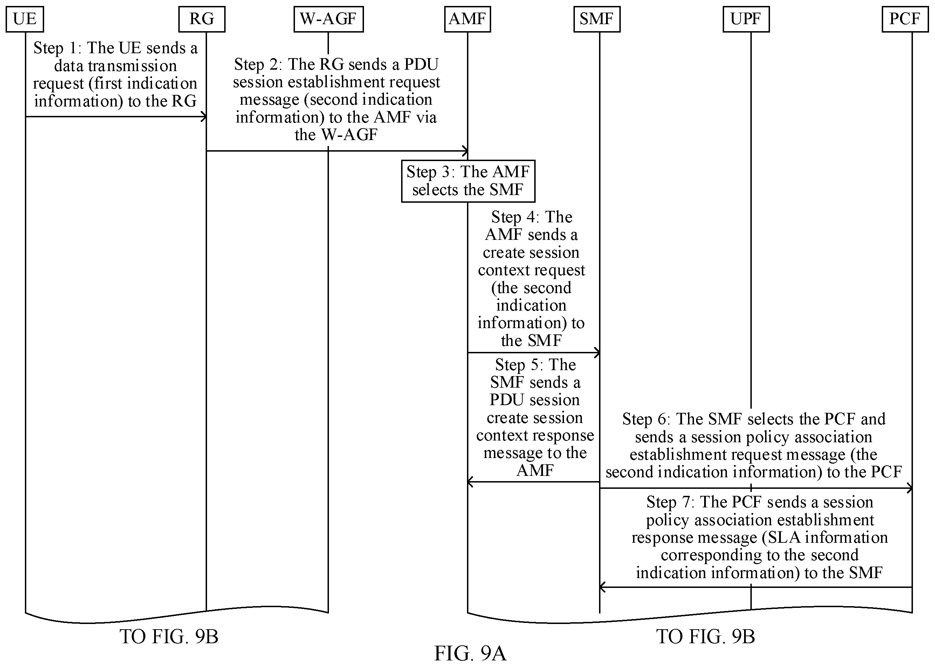

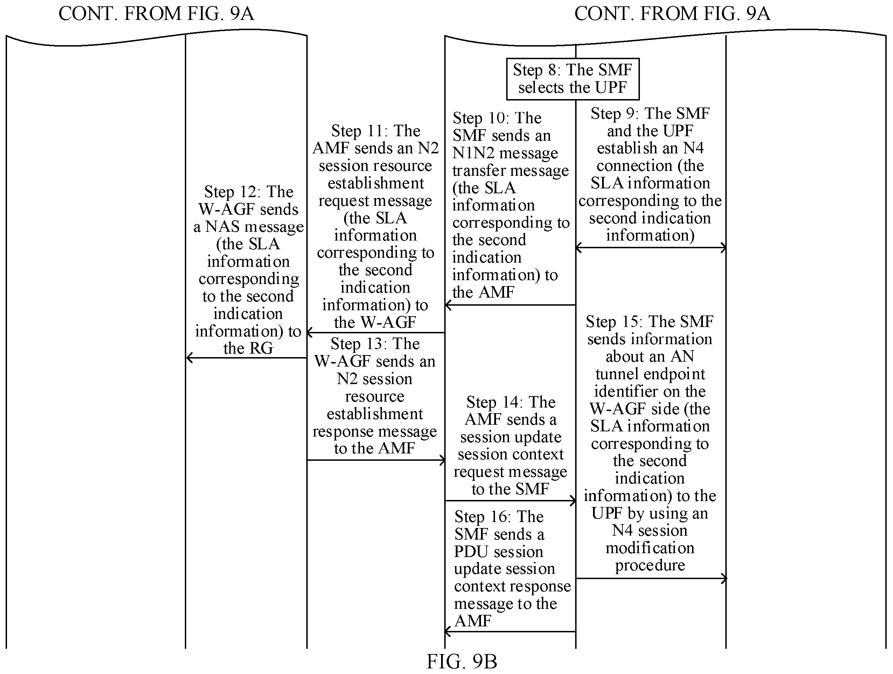

FIG. 9A and FIG. 9B show a process in which the residential gateway obtains the mapping relationship in Manner 4.

Step 1: The UE sends a data transmission request to the RG.

The data transmission request is used to trigger a session establishment procedure or a session modification procedure of the RG. The data transmission request carries first indication information, and the first indication information includes a PLMN ID of the UE and/or an IP address of an access network device in a PLMN of the UE.

Step 2: The RG sends a PDU session establishment request message (or a PDU session modification request message) to the AMF via a W-AGF.

For example, the PDU session establishment request message (or the PDU session modification request message) may include second indication information, or a NAS message that carries the PDU session establishment request message (or the PDU session modification request message) may carry the second indication information. The second indication information may also be referred to as SLA request indication information, and the second indication information may include at least one of the PLMN ID of the UE, the IP address of the access network device in the PLMN of the UE, and a DNN or S-NSSAI corresponding to the PLMN of the UE.

It should be noted that, if the RG has not established a session used by the UE for transmission when the UE sends the data transmission request to the RG, step 2 and subsequent steps are session establishment related procedures. If the RG has established the session when the UE sends the data transmission request to the RG, step 2 and subsequent steps are session modification related procedures. The following uses only the session establishment procedure as an example for description.

Step 3: The AMF selects the SMF.

Step 4: The AMF sends a create session context request to the SMF.

For example, the create session context request includes the second indication information.

Step 5: The SMF sends a PDU session create session context response message to the AMF.

Step 6: Optionally, the SMF selects the PCF and sends a session policy association establishment request message to the PCF, where the session policy association establishment request message carries the second indication information.

Step 7: Optionally, the PCF sends a session policy association establishment response message to the SMF.

For example, the PCF may determine, based on the second indication information and local configuration information, SLA information corresponding to the second indication information. The SLA information corresponding to the second indication information includes at least one mapping relationship between a DSCP value and a QoS requirement. The SLA information may further include other content. Details are not described herein.

It should be noted that the SLA information corresponding to the second indication information is not all possible SLA information of the RG, but SLA information corresponding to a specific PLMN, that is, SLA information corresponding to the PLMN of the UE (or SLA information corresponding to the IP address of the access network device in the PLMN of the UE).

In addition, if the SMF does not send the session policy association establishment request to the PCF, the SMF may alternatively determine, based on the local configuration information and the second indication information, the SLA information corresponding to the second indication information.

Step 8: The SMF selects a UPF.

Step 9: The SMF and the UPF establish an N4 connection.

Specifically, the SMF sends an N4 rule to the UPF. For example, the N4 rule includes rules such as a PDR and an FAR. Optionally, the PDR and/or the FAR may include the SLA information corresponding to the second indication information.

Step 10: The SMF sends an N1N2 message transfer message to the AMF.

The message may include information such as a session identifier, N2 interface session management information, and an N1 interface session management container.

The N2 interface session management information is sent by the SMF to the W-AGF via the AMF, and the N1 interface session management container is sent by the SMF to the RG via the AMF (for example, the AMF sends the N1 interface session management container to the RG by using a NAS message).

The N1 interface session management container includes a PDU session establishment accept message. The PDU session establishment accept message further includes the SLA information corresponding to the second indication information.

Step 11: The AMF sends an N2 session resource establishment request message to the W-AGF.

For example, the N2 session resource establishment request message carries the N1 interface session management container and the NAS message that needs to be sent to the RG. The NAS message includes the session identifier and the N1 interface session management container.

Step 12: The W-AGF sends the NAS message to the RG.

Step 13: The W-AGF sends an N2 session resource establishment response message to the AMF.

For example, the N2 session resource establishment response message carries a tunnel endpoint identifier (which is subsequently sent to the UPF via the AMF and the SMF) on the W-AGF side.

Step 14: The AMF sends a session update session context request message to the SMF.

For example, the session update session context request message includes information about an AN tunnel endpoint identifier on the W-AGF side.

Step 15: The SMF sends the information about the AN tunnel endpoint identifier on the W-AGF side to the UPF by using an N4 session modification procedure, where a PDR sent by the SMF to the UPF by using the N4 session modification procedure may optionally further include the SLA information corresponding to the second indication information. In other words, the SMF sends the SLA information corresponding to the second indication information to the UPF by using step 9 or step 15.

Step 16: The SMF sends a PDU session update session context response message to the AMF.

According to the foregoing design, a core network element (for example, the PCF) may determine, based on the second indication information, the SLA information corresponding to the second indication information, and send the SLA information corresponding to the second indication information to the RG and the UPF.

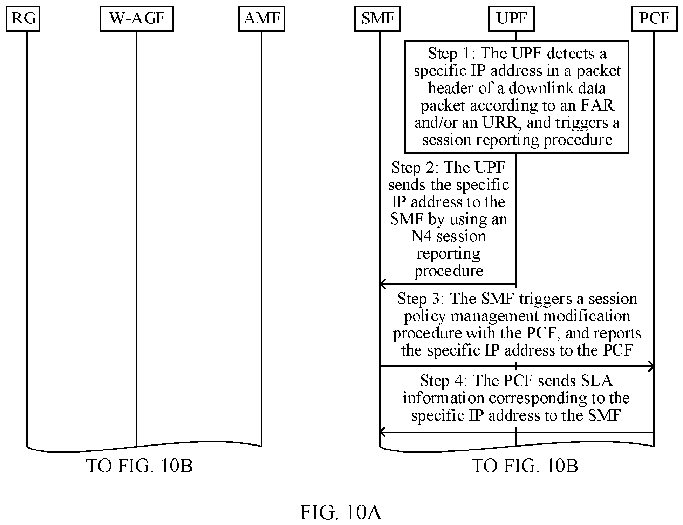

FIG. 10A and FIG. 10B show a process in which the residential gateway obtains the mapping relationship in Manner 5.

Step 1: A UPF detects a specific IP address in a packet header of a downlink data packet according to an FAR and/or an URR, and triggers a session reporting procedure.

Step 2: The UPF sends the specific IP address to the SMF by using an N4 session reporting procedure.

Step 3: The SMF triggers a session policy management modification procedure with the PCF, and reports the specific IP address to the PCF.

Step 4: The PCF sends SLA information corresponding to the specific IP address to the SMF.

The SLA information corresponding to the specific IP address may be carried in a PCC rule.

If triggering the session policy management modification procedure with the PCF in step 3, the SMF derives a new PDR, FAR, QoS profile, QoS rule, and the like according to the PCC rule sent by the PCF, where the new PDR, FAR, QoS profile, QoS rule, and the like include the SLA information corresponding to the specific IP address.

If skipping initiating the session policy management modification procedure with the PCF, the SMF may determine, based on a configuration of the SMF, the SLA information corresponding to the specific IP address.

Step 5: The SMF and the UPF establish an N4 connection.

Specifically, the SMF sends an N4 rule to the UPF, where the N4 rule includes rules such as the PDR and the FAR. Optionally, the PDR and/or the FAR may further include the SLA information corresponding to the specific IP address.

Step 6: The SMF sends an N1N2 message transfer message to the AMF.

The message may include information such as a session identifier, N2 interface session management information, and an N1 interface session management container.

The N2 interface session management information is sent by the SMF to a W-AGF via the AMF, and the N1 interface session management container is sent by the SMF to the RG via the AMF (for example, the AMF sends the N1 interface session management container to the RG by using a NAS message).

The N1 interface session management container includes a PDU session establishment accept message. The PDU session establishment accept message further includes the SLA information corresponding to the specific IP address.

Step 7: The AMF sends an N2 session resource establishment request message to the W-AGF.

For example, the N2 session resource establishment request message carries the N1 interface session management container and the NAS message that needs to be sent to the RG. The NAS message includes the session identifier and the N1 interface session management container.

Step 8: The W-AGF sends the NAS message to the RG.

Step 9: The W-AGF sends an N2 session resource establishment response message to the AMF.

For example, the N2 session resource establishment response message carries a tunnel endpoint identifier (which is subsequently sent to the UPF via the AMF and the SMF) on the W-AGF side.

Step 10: The AMF sends a session update session context request message to the SMF.

For example, the session update session context request message includes information about an AN tunnel endpoint identifier on the W-AGF side.

Step 11: The SMF sends the information about the AN tunnel endpoint identifier on the W-AGF side to the UPF by using an N4 session modification procedure, where a PDR sent by the SMF to the UPF by using the N4 session modification procedure may optionally further include the SLA information corresponding to the specific IP address. In other words, the SMF sends the SLA information corresponding to the specific IP address to the UPF by using step 9 or step 15.

Step 12: The SMF sends a PDU session update session context response message to the AMF.

According to the foregoing design, the UPF triggers the SMF or the PCF to determine the SLA information corresponding to the specific IP address, and send the SLA information corresponding to the specific IP address to the RG and the UPF.

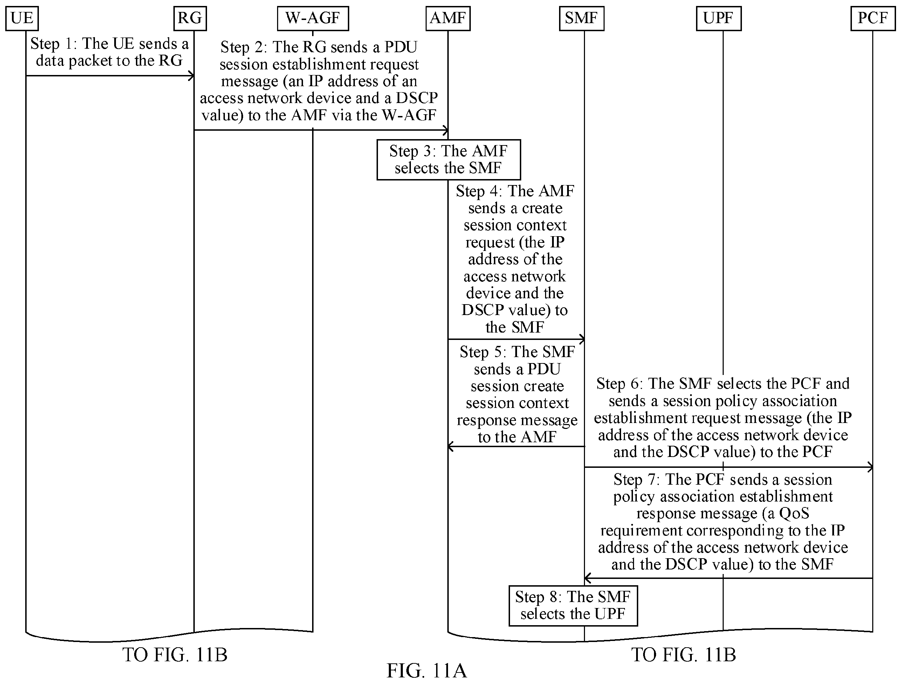

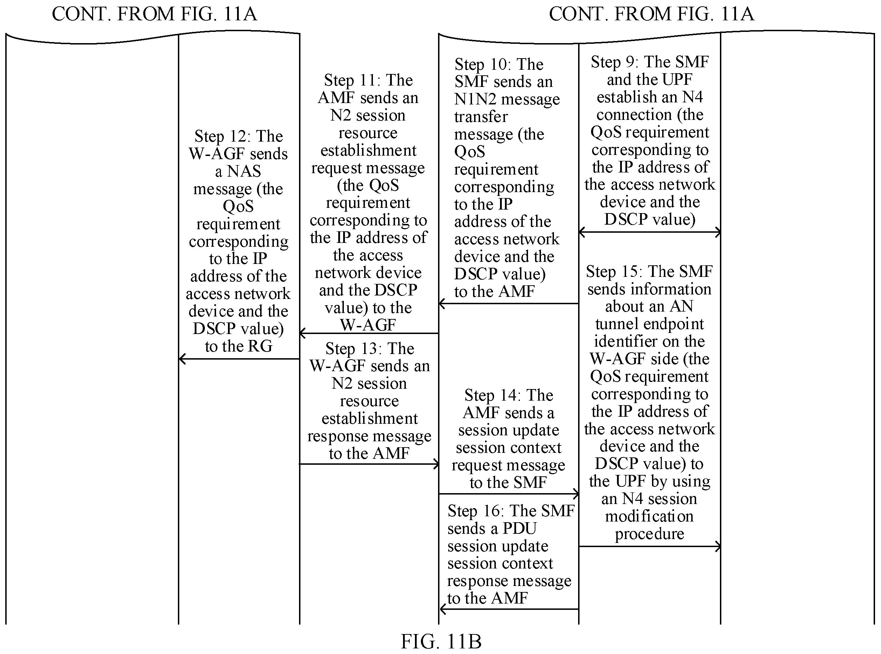

FIG. 11A and FIG. 11B are a specific flowchart of obtaining, by an RG, a QoS requirement corresponding to a specific IP address and a DSCP value, and corresponds to the embodiment shown in FIG. 5.

Step 1: UE sends a data packet to the RG.

An IP layer packet header of the data packet carries an IP address of an access network device and a DSCP value. After receiving the data packet, if the RG determines that there is no SLA information corresponding to the IP address, or there is no QoS requirement corresponding to the DSCP value in the SLA information corresponding to the IP address, the RG may buffer the data packet.

Step 2: The RG sends a PDU session establishment request message (or a PDU session modification request message) to an AMF via a W-AGF.

For example, the PDU session establishment request message (or the PDU session modification request message) may include the IP address of the access network device and the DSCP value, or a NAS message that carries the PDU session establishment request message (or the PDU session modification request message) may carry the IP address of the access network device and the DSCP value.

It should be noted that, if the RG has not established a session used by the UE for transmission when the UE sends the data packet to the RG, step 2 and subsequent steps are session establishment related procedures. If the RG has established the session when the UE sends the data packet to the RG, step 2 and subsequent steps are session modification related procedures. The following uses only the session establishment procedure as an example for description.

Step 3: The AMF selects an SMF.

Step 4: The AMF sends a create session context request to the SMF.

For example, the create session context request includes the IP address of the access network device and the DSCP value.

Step 5: The SMF sends a PDU session create session context response message to the AMF.

Step 6: Optionally, the SMF selects a PCF and sends a session policy association establishment request message to the PCF, where the session policy association establishment request message carries the IP address of the access network device and the DSCP value.

Step 7: Optionally, the PCF sends a session policy association establishment response message to the SMF.

For example, the PCF may determine, based on the IP address of the access network device, the DSCP value, and local configuration information, a QoS requirement corresponding to the IP address of the access network device and the DSCP value.

In addition, if the SMF does not send a session policy association establishment request to the PCF, the SMF may alternatively determine, based on the local configuration information, the IP address of the access network device, and the DSCP value, the QoS requirement corresponding to the IP address of the access network device and the DSCP value.

Step 8: The SMF selects a UPF.

Step 9: The SMF and the UPF establish an N4 connection.

Specifically, the SMF sends an N4 rule to the UPF. For example, the N4 rule includes rules such as a PDR and an FAR. Optionally, the PDR and/or the FAR may include the QoS requirement corresponding to the IP address of the access network device and the DSCP value.

Step 10: The SMF sends an N1N2 message transfer message to the AMF.

The message may include information such as a session identifier, N2 interface session management information, and an N1 interface session management container.

The N2 interface session management information is sent by the SMF to the W-AGF via the AMF, and the N1 interface session management container is sent by the SMF to the RG via the AMF (for example, the AMF sends the N1 interface session management container to the RG by using a NAS message).

The N1 interface session management container includes a PDU session establishment accept message. The PDU session establishment accept message further includes the QoS requirement corresponding to the IP address of the access network device and the DSCP value.

Step 11: The AMF sends an N2 session resource establishment request message to the W-AGF.

For example, the N2 session resource establishment request message carries the N1 interface session management container and the NAS message that needs to be sent to the RG. The NAS message includes the session identifier and the N1 interface session management container.

Step 12: The W-AGF sends the NAS message to the RG.

In addition, after receiving the NAS message, the RG sends the buffered data packet based on the QoS requirement corresponding to the IP address of the access network device and the DSCP value.

Step 13: The W-AGF sends an N2 session resource establishment response message to the AMF.

For example, the N2 session resource establishment response message carries a tunnel endpoint identifier (which is subsequently sent to the UPF via the AMF and the SMF) on the W-AGF side.

Step 14: The AMF sends a session update session context request message to the SMF.

For example, the session update session context request message includes information about an AN tunnel endpoint identifier on the W-AGF side.

Step 15: The SMF sends the information about the AN tunnel endpoint identifier on the W-AGF side to the UPF by using an N4 session modification procedure, where a PDR sent by the SMF to the UPF by using the N4 session modification procedure may optionally further include the QoS requirement corresponding to the IP address of the access network device and the DSCP value. In other words, the SMF sends, to the UPF by using step 9 or step 15, the QoS requirement corresponding to the IP address of the access network device and the DSCP value.

Step 16: The SMF sends a PDU session update session context response message to the AMF.

According to the foregoing design, the RG buffers the packet received from the UE, and requests, from the SMF (or the PCF), the QoS requirement corresponding to the specific IP address and the DSCP value that are in the packet, and the RG sends the packet based on the obtained QoS requirement.

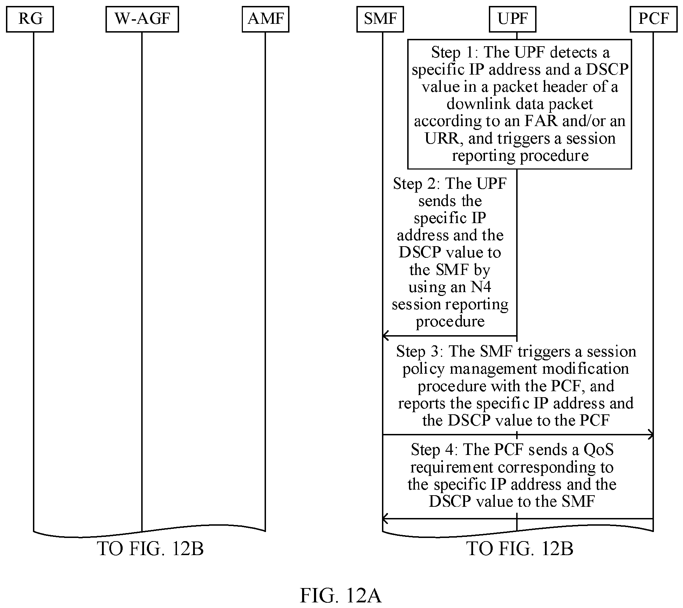

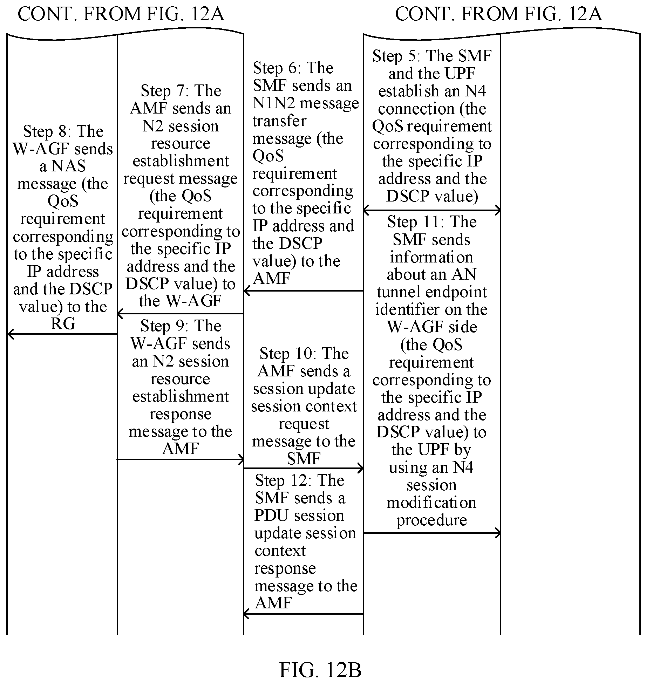

FIG. 12A and FIG. 12B are a specific flowchart of obtaining, by an RG, a QoS requirement corresponding to a specific IP address and a DSCP value, and corresponds to the embodiment shown in FIG. 6.

Step 1: A UPF detects a specific IP address and a DSCP value in a packet header of a downlink data packet according to an FAR and/or an URR, and triggers a session reporting procedure.

Step 2: The UPF sends the specific IP address and the DSCP value to an SMF by using an N4 session reporting procedure.

Step 3: The SMF triggers a session policy management modification procedure with a PCF, and reports the specific IP address and the DSCP value to the PCF.

Step 4: The PCF sends a QoS requirement corresponding to the specific IP address and the DSCP value to the SMF.

The QoS requirement corresponding to the specific IP address and the DSCP value may be carried in a PCC rule.

If triggering the session policy management modification procedure with the PCF in step 3, the SMF derives a new PDR, FAR, QoS profile, QoS rule, and the like according to the PCC rule sent by the PCF, where the new PDR, FAR, QoS profile, QoS rule, and the like include the QoS requirement corresponding to the specific IP address and the DSCP value.

If skipping initiating the session policy management modification procedure with the PCF, the SMF may determine, based on a configuration of the SMF, the QoS requirement corresponding to the specific IP address and the DSCP value.

Step 5: The SMF and the UPF establish an N4 connection.

Specifically, the SMF sends an N4 rule to the UPF, where the N4 rule includes rules such as the PDR and the FAR. Optionally, the PDR and/or the FAR may further include the QoS requirement corresponding to the specific IP address and the DSCP value.

Step 6: The SMF sends an N1N2 message transfer message to an AMF.

The message may include information such as a session identifier, N2 interface session management information, and an N1 interface session management container.

The N2 interface session management information is sent by the SMF to a W-AGF via the AMF, and the N1 interface session management container is sent by the SMF to the RG via the AMF (for example, the AMF sends the N1 interface session management container to the RG by using a NAS message).

The N1 interface session management container includes a PDU session establishment accept message. The PDU session establishment accept message further includes the QoS requirement corresponding to the specific IP address and the DSCP value.

Step 7: The AMF sends an N2 session resource establishment request message to the W-AGF.

For example, the N2 session resource establishment request message carries the N1 interface session management container and the NAS message that needs to be sent to the RG. The NAS message includes the session identifier and the N1 interface session management container.

Step 8: The W-AGF sends the NAS message to the RG.

Step 9: The W-AGF sends an N2 session resource establishment response message to the AMF.

For example, the N2 session resource establishment response message carries a tunnel endpoint identifier (which is subsequently sent to the UPF via the AMF and the SMF) on the W-AGF side.

Step 10: The AMF sends a session update session context request message to the SMF.

For example, the session update session context request message includes information about an AN tunnel endpoint identifier on the W-AGF side.

Step 11: The SMF sends the information about the AN tunnel endpoint identifier on the W-AGF side to the UPF by using an N4 session modification procedure, where a PDR sent by the SMF to the UPF by using the N4 session modification procedure may optionally further include the QoS requirement corresponding to the specific IP address and the DSCP value. In other words, the SMF sends, to the UPF by using step 9 or step 15, the QoS requirement corresponding to the specific IP address and the DSCP value.

Step 12: The SMF sends a PDU session update session context response message to the AMF.

According to the foregoing design, when detecting the packet including the specific IP address and the DSCP value, the UPF reports the specific IP address and the DSCP value to the SMF, and the SMF or the PCF determines the QoS requirement corresponding to the specific IP address and the DSCP value, and notifies the RG of the QoS requirement.

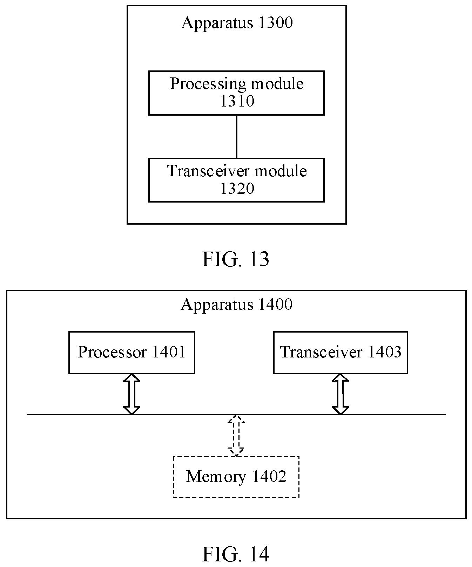

FIG. 13 is a possible example block diagram of a communication apparatus according to an embodiment of this application. The apparatus 1300 includes a transceiver module 1320 and a processing module 1310. The transceiver module 1320 may include a receiving unit and a sending unit. The processing module 1310 is configured to control and manage an action of the apparatus 1300. The transceiver module 1320 is configured to support the apparatus 1300 in communicating with another network entity. Optionally, the apparatus 1300 may further include a storage unit, and the storage unit is configured to store program code and data of the apparatus 1300.

Optionally, the modules in the apparatus 1300 may be implemented by using software.

Optionally, the processing module 1310 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in embodiments of this application. Alternatively, the processor may be a combination of processors implementing a computing function, for example, a combination of one or more microprocessors, or a combination of the DSP and a microprocessor. The transceiver module 1320 may be a communication interface, a transceiver, a transceiver circuit, or the like. The communication interface is a general term. During specific implementation, the communication interface may include a plurality of interfaces. The storage unit may be a memory.

When the apparatus 1300 is a residential gateway or a chip in the residential gateway, the processing module 1310 in the apparatus 1300 may support the apparatus 1300 in performing actions of the residential gateway in the foregoing method examples, for example, may support the apparatus 1300 in performing step 410 in FIG. 4.

The transceiver module 1320 may support the apparatus 1300 in communicating with a core network element. For example, the transceiver module 1320 may support the apparatus 1300 in performing step 410 or step 420 in FIG. 4.

For example,
the transceiver module 1320 is configured to receive a packet from a terminal device that accesses the residential gateway, where the packet includes a first differentiated services code point DSCP value and first indication information, the first indication information includes an identifier of a public land mobile network of the terminal device or an IP address of a first access network device, and the first access network device is located in the public land mobile network of the terminal device;
the processing module 1310 is configured to determine, based on the first indication information and the first DSCP value, a quality of service QoS requirement corresponding to the first indication information and the first DSCP value; and
the transceiver module 1320 is configured to send the packet based on the QoS requirement.

In a possible design, the processing module 1310 is configured to: when determining, based on the first indication information and the first DSCP value, the QoS requirement corresponding to the first indication information and the first DSCP value, determine, based on the first indication information, a mapping relationship corresponding to the first indication information, where the mapping relationship is a mapping relationship between a DSCP value and a QoS requirement; and determine, based on the first DSCP value and the mapping relationship corresponding to the first indication information, the QoS requirement corresponding to the first DSCP value.

A packet is received from a terminal device that accesses the residential gateway, where the packet includes a first DSCP value and first indication information, the first indication information includes an identifier of a public land mobile network of the terminal device or an IP address of a first access network device, and the first access network device is located in the public land mobile network of the terminal device.

The processing module 1310 is configured to: determine, based on the first indication information, a mapping relationship corresponding to the first indication information, where the mapping relationship is a mapping relationship between a DSCP value and a QoS requirement; determine, based on the first DSCP value and the mapping relationship corresponding to the first indication information, a QoS requirement corresponding to the first DSCP value; and send the packet based on the QoS requirement corresponding to the first DSCP value by using the transceiver module 1320.

In a possible design, the transceiver module 1320 is configured to receive at least one group of mapping relationships from a session management network element, where the at least one group of mapping relationships is in one-to-one correspondence with an identifier of at least one public land mobile network, and/or the at least one group of mapping relationships is in one-to-one correspondence with an IP address of at least one access network device, and each group of mapping relationships includes at least one mapping relationship.

The processing module 1310 is configured to: when determining, based on the first indication information, the mapping relationship corresponding to the first indication information, determine, based on the first indication information and the at least one group of mapping relationships, the mapping relationship corresponding to the first indication information.

In a possible design, the transceiver module 1320 is configured to: send second indication information to a session management network element, where the second indication information includes one or more of the identifier of the public land mobile network of the terminal device, the IP address of the first access network device, a first data network name, and first network slice selection assistance information, and the first data network name and/or the first network slice selection assistance information indicate/indicates the public land mobile network of the terminal device; and receive, from the session management network element, a mapping relationship corresponding to the second indication information.

The processing module 1310 is configured to: when determining, based on the first indication information, the mapping relationship corresponding to the first indication information, determine, based on the first indication information and the mapping relationship corresponding to the second indication information, the mapping relationship corresponding to the first indication information.

In a possible design, the transceiver module 1320 is configured to: before sending the second indication information to the session management network element, receive a first parameter from the terminal device, where the first parameter includes the identifier of the public land mobile network of the terminal device and/or an IP address of an access network device in the public land mobile network of the terminal device.

The processing module 1310 is configured to determine the second indication information based on the first parameter.

In a possible design, the processing module 1310 is configured to: before the residential gateway sends the second indication information to the session management network element, determine that a mapping relationship corresponding to the first parameter is not stored.

For another example, the transceiver module 1320 is configured to receive a packet from a terminal device that accesses the residential gateway, where the packet includes a first differentiated services code point DSCP value and a first IP address, and the first IP address is an IP address of an access network device.

The processing module 1310 is configured to: buffer the packet; and send the DSCP value and the first IP address to a session management network element by using the transceiver module 1320.

The transceiver module 1320 is configured to receive, from the session management network element, a QoS requirement corresponding to the first IP address and the DSCP value.

The processing module 1310 is configured to send the packet based on the QoS requirement.

In a possible design, the processing module 1310 is configured to: before sending the DSCP value and the first IP address to the session management network element, determine that the QoS requirement corresponding to the first IP address and the DSCP value is not stored.

It should be understood that the apparatus 1300 according to this embodiment of this application may correspond to the residential gateway in the foregoing method embodiments, and operations and/or functions of the modules in the apparatus 1300 are separately used to implement corresponding steps of the method of the residential gateway in the foregoing method embodiments. Therefore, beneficial effects in the foregoing method embodiments can also be implemented. For brevity, details are not described herein again.

When the apparatus 1300 is a core network element or a chip in the core network element, the processing module 1310 in the apparatus 1300 may support the apparatus 1300 in performing an action of the core network element in the foregoing method examples.

The transceiver module 1320 may support the apparatus 1300 in communicating with a residential gateway.

For example,
the processing module 1310 is configured to determine a mapping relationship between a DSCP value and a QoS requirement based on subscription information of the residential gateway; and
the transceiver module 1320 is configured to send the mapping relationship to the residential gateway.

In a possible design, the processing module 1310 is configured to: when determining the mapping relationship between the DSCP value and the QoS requirement based on the subscription information of the residential gateway, determine at least one group of mapping relationships based on the subscription information of the residential gateway, where the at least one group of mapping relationships is in one-to-one correspondence with an identifier of at least one public land mobile network, and/or the at least one group of mapping relationships is in one-to-one correspondence with an IP address of at least one access network device, and each group of mapping relationships includes at least one mapping relationship.

The transceiver module 1320 is configured to: when sending the mapping relationship to the residential gateway, send the at least one group of mapping relationships to the residential gateway.

In a possible design, the core network element is a session management network element in a public land mobile network of the residential gateway.

In a possible design, the core network element is a policy control network element in a public land mobile network of the residential gateway.

The transceiver module 1320 is configured to: when sending the mapping relationship to the residential gateway, send the mapping relationship to the residential gateway via a session management network element.

For another example, the processing module 1310 invokes the transceiver module 1320, and is configured to: obtain second indication information from a residential gateway, where the second indication information includes one or more of an identifier of a public land mobile network of a terminal device, an IP address of a first access network device, a first data network name, and first network slice selection assistance information, and the first data network name and/or the first network slice selection assistance information indicate/indicates the public land mobile network of the terminal device; and send a mapping relationship corresponding to the second indication information to the residential gateway, where the mapping relationship is a mapping relationship between a DSCP value and a QoS requirement.

In a possible design, the core network element is a session management network element in a public land mobile network of the residential gateway.

In a possible design, the core network element is a policy control network element in a public land mobile network of the residential gateway.

The transceiver module 1320 is configured to: when sending the mapping relationship corresponding to the second indication information to the residential gateway, send the mapping relationship corresponding to the second indication information to the residential gateway via a session management network element.

It should be understood that the apparatus 1300 according to this embodiment of this application may correspond to the core network element in the foregoing method embodiments, and operations and/or functions of the modules in the apparatus 1300 are separately used to implement corresponding steps of the method of the core network element in the foregoing method embodiments. Therefore, beneficial effects in the foregoing method embodiments can also be implemented. For brevity, details are not described herein again.

FIG. 14 is a diagram of a structure of a communication apparatus 1400 according to an embodiment of this application. As shown in FIG. 14, the apparatus 1400 includes a processor 1401.

When the apparatus 1400 is a residential gateway or a chip in the residential gateway, in a possible implementation, the processor 1401 is configured to invoke an interface to perform the following actions:
receiving a packet from a terminal device that accesses the residential gateway, where the packet includes a first differentiated services code point DSCP value and first indication information, the first indication information includes an identifier of a public land mobile network of the terminal device or an IP address of a first access network device, and the first access network device is located in the public land mobile network of the terminal device; determining, based on the first indication information and the first DSCP value, a quality of service QoS requirement corresponding to the first indication information and the first DSCP value; and sending the packet based on the QoS requirement.

In a possible implementation, the processor 1401 is configured to invoke an interface to perform the following actions:
receiving a packet from a terminal device that accesses the residential gateway, where the packet includes a first DSCP value and a first IP address, and the first IP address is an IP address of an access network device; buffering the packet, and sending the DSCP value and the first IP address to a session management network element; receiving, from the session management network element, a QoS requirement corresponding to the first IP address and the DSCP value; and sending the packet based on the QoS requirement.

It should be understood that the apparatus 1400 may be further configured to perform another step and/or operation on the residential gateway side in the foregoing embodiments. For brevity, details are not described herein again.

When the apparatus 1400 is a core network element or a chip in the core network element, in a possible implementation, the processor 1401 is configured to invoke an interface to perform the following actions: determining a mapping relationship between a DSCP value and a QoS requirement based on subscription information of a residential gateway; and sending the mapping relationship to the residential gateway.

In a possible implementation, the processor 1401 is configured to invoke an interface to perform the following actions:
obtaining second indication information from a residential gateway, where the second indication information includes one or more of an identifier of a public land mobile network of a terminal device, an IP address of a first access network device, a first data network name, and first network slice selection assistance information, and the first data network name and/or the first network slice selection assistance information indicate/indicates the public land mobile network of the terminal device; and sending a mapping relationship corresponding to the second indication information to the residential gateway, where the mapping relationship is a mapping relationship between a DSCP value and a QoS requirement.

It should be understood that the apparatus 1400 may be further configured to perform another step and/or operation on the core network element side in the foregoing embodiments. For brevity, details are not described herein again.

It should be understood that the processor 1401 may invoke an interface to perform the foregoing receiving and sending actions. The invoked interface may be a logical interface or a physical interface. This is not limited. Optionally, the physical interface may be implemented by using a transceiver. Optionally, the apparatus 1400 further includes a transceiver 1403.

Optionally, the apparatus 1400 further includes a memory 1402, and the memory 1402 may store program code in the foregoing method embodiments, so that the processor 1401 invokes the program code.

Specifically, if the apparatus 1400 includes the processor 1401, the memory 1402, and the transceiver 1403, the processor 1401, the memory 1402, and the transceiver 1403 communicate with each other through an inner connection path, to transmit a control signal and/or a data signal. In a possible design, the processor 1401, the memory 1402, and the transceiver 1403 may be implemented by using a chip. The processor 1401, the memory 1402, and the transceiver 1403 may be implemented in a same chip, or may be separately implemented in different chips, or functions of any two of the processor 1401, the memory 1402, and the transceiver 1403 are implemented in one chip. The memory 1402 may store the program code, and the processor 1401 invokes the program code stored in the memory 1402, to implement a corresponding function of the apparatus 1400.

The method disclosed in the foregoing embodiment of this application may be applied to the processor, or may be implemented by the processor. The processor may be an integrated circuit chip and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly, or may be a system on chip (system on chip, SoC), or may be a central processing unit (central processor unit, CPU), or may be a network processor (network processor, NP), or may be a digital signal processing circuit (digital signal processor, DSP), or may be a microcontroller (micro controller unit, MCU), or may be a programmable logic device (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a communication system. The system includes one or more of a residential gateway, a core network element, and a terminal device. The core network element is located in a public land mobile network of the residential gateway, and the core network element includes one or more of a session management network element, a policy control network element, a user plane network element, and an access and mobility management network element. The residential gateway is configured to perform steps and/or operations on the residential gateway side in the foregoing embodiments, the core network element is configured to perform steps and/or operations on the core network element side in the foregoing embodiments, and the terminal device is configured to perform steps and/or operations on the terminal device side in the foregoing embodiments.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean an execution sequence in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

## Claims

1. A communication method, wherein the method comprises:
receiving, by a residential gateway, a packet from a terminal device that accesses the residential gateway, wherein the packet comprises a first differentiated services code point DSCP value and first indication information, the first indication information comprises an identifier of a public land mobile network of the terminal device or an IP address of a first access network device, and the first access network device is located in the public land mobile network of the terminal device;
determining, by the residential gateway based on the first indication information and the first DSCP value, a quality of service QoS requirement corresponding to the first indication information and the first DSCP value; and
sending, by the residential gateway, the packet based on the QoS requirement.

2. The method according to claim 1, wherein the determining, by the residential gateway based on the first indication information and the first DSCP value, a QoS requirement corresponding to the first indication information and the first DSCP value comprises:
determining, by the residential gateway based on the first indication information, a mapping relationship corresponding to the first indication information, wherein the mapping relationship is a mapping relationship between a DSCP value and a QoS requirement; and
determining, by the home network based on the first DSCP value and the mapping relationship corresponding to the first indication information, the QoS requirement corresponding to the first DSCP value.

3. The method according to claim 2, further comprising:
receiving, by the residential gateway, at least one group of mapping relationships from a session management network element, wherein the at least one group of mapping relationships is in one-to-one correspondence with an identifier of at least one public land mobile network, and/or the at least one group of mapping relationships is in one-to-one correspondence with an IP address of at least one access network device, and each group of mapping relationships comprises at least one mapping relationship; and
the determining, by the residential gateway based on the first indication information, a mapping relationship corresponding to the first indication information comprises:
determining, by the residential gateway based on the first indication information and the at least one group of mapping relationships, the mapping relationship corresponding to the first indication information.

4. The method according to claim 2, further comprising:
sending, by the residential gateway, second indication information to a session management network element, wherein the second indication information comprises one or more of the identifier of the public land mobile network of the terminal device, the IP address of the first access network device, a first data network name, and first network slice selection assistance information, and the first data network name and/or the first network slice selection assistance information indicate/indicates the public land mobile network of the terminal device; and
receiving, by the residential gateway from the session management network element, a mapping relationship corresponding to the second indication information, wherein
the determining, by the residential gateway based on the first indication information, a mapping relationship corresponding to the first indication information comprises:
determining, by the residential gateway based on the first indication information and the mapping relationship corresponding to the second indication information, the mapping relationship corresponding to the first indication information.

5. The method according to claim 4, wherein before the sending, by the residential gateway, second indication information to a session management network element, the method further comprises:
receiving, by the residential gateway, a first parameter from the terminal device, wherein the first parameter comprises the identifier of the public land mobile network of the terminal device and/or an IP address of an access network device in the public land mobile network of the terminal device; and
determining, by the residential gateway, the second indication information based on the first parameter.

6. The method according to claim 5, wherein before the sending, by the residential gateway, second indication information to a session management network element, the method further comprises:
determining, by the home network element, that a mapping relationship corresponding to the first parameter is not stored.

7. A communication method, wherein the method comprises:
receiving, by a residential gateway, a packet from a terminal device that accesses the residential gateway, wherein the packet comprises a first differentiated services code point DSCP value and a first IP address, and the first IP address is an IP address of an access network device;
buffering, by the residential gateway, the packet, and sending the DSCP value and the first IP address to a session management network element;
receiving, by the residential gateway from the session management network element, a QoS requirement corresponding to the first IP address and the DSCP value; and
sending, by the residential gateway, the packet based on the QoS requirement.

8. The method according to claim 7, wherein before the sending the DSCP value and the first IP address to a session management network element, the method further comprises:
determining, by the home network element, that the QoS requirement corresponding to the first IP address and the DSCP value is not stored.

9. A communication method, wherein the method comprises:
determining, by a core network element, a mapping relationship between a DSCP value and a QoS requirement based on subscription information of a residential gateway; and
sending, by the core network element, the mapping relationship to the residential gateway.

10. The method according to claim 9, wherein the determining, by a core network element, a mapping relationship between a DSCP value and a QoS requirement based on subscription information of a residential gateway comprises:
determining, by the core network element, at least one group of mapping relationships based on the subscription information of the residential gateway, wherein the at least one group of mapping relationships is in one-to-one correspondence with an identifier of at least one public land mobile network, and/or the at least one group of mapping relationships is in one-to-one correspondence with an IP address of at least one access network device, and each group of mapping relationships comprises at least one mapping relationship; and
the sending, by the core network element, the mapping relationship to the residential gateway comprises:
sending, by the core network element, the at least one group of mapping relationships to the residential gateway.

11. The method according to claim 9 or 10, wherein the core network element is a session management network element in a public land mobile network of the residential gateway.

12. The method according to claim 9 or 10, wherein the core network element is a policy control network element in a public land mobile network of the residential gateway; and
the sending, by the core network element, the mapping relationship to the residential gateway comprises:
sending, by the policy control network element, the mapping relationship to the residential gateway via a session management network element.

13. A communication method, wherein the method comprises:
obtaining, by a core network element, second indication information from a residential gateway, wherein the second indication information comprises one or more of an identifier of a public land mobile network of a terminal device, an IP address of a first access network device, a first data network name, and first network slice selection assistance information, and the first data network name and/or the first network slice selection assistance information indicate/indicates the public land mobile network of the terminal device; and
sending, by the core network element, a mapping relationship corresponding to the second indication information to the residential gateway, wherein the mapping relationship is a mapping relationship between a DSCP value and a QoS requirement.

14. The method according to claim 13, wherein the core network element is a session management network element in a public land mobile network of the residential gateway.

15. The method according to claim 13, wherein the core network element is a policy control network element in a public land mobile network of the residential gateway; and
the sending, by the core network element, a mapping relationship corresponding to the second indication information to the residential gateway comprises:
sending, by the policy control network element, the mapping relationship corresponding to the second indication information to the residential gateway via a session management network element.

16. A communication method, wherein the method comprises:
determining, by a core network element, a mapping relationship between a DSCP value and a QoS requirement based on subscription information of a residential gateway, and sending the mapping relationship to the residential gateway; and
receiving, by the residential gateway, a packet from a terminal device that accesses the residential gateway, wherein the packet comprises a first differentiated services code point DSCP value and first indication information, the first indication information comprises an identifier of a public land mobile network of the terminal device or an IP address of a first access network device, and the first access network device is located in the public land mobile network of the terminal device; determining, based on the first indication information, the first DSCP value, and the received mapping relationship, a QoS requirement corresponding to the first indication information and the first DSCP value; and sending the packet based on the QoS requirement.

17. A communication method, wherein the method comprises:
obtaining, by a core network element, second indication information from a residential gateway, wherein the second indication information comprises one or more of an identifier of a public land mobile network of a terminal device, an IP address of a first access network device, a first data network name, and first network slice selection assistance information, and the first data network name and/or the first network slice selection assistance information indicate/indicates the public land mobile network of the terminal device; and sending a mapping relationship corresponding to the second indication information to the residential gateway, wherein the mapping relationship is a mapping relationship between a DSCP value and a QoS requirement;
and
receiving, by the residential gateway, a packet from the terminal device that accesses the residential gateway, wherein the packet comprises a first differentiated services code point DSCP value and first indication information, the first indication information comprises the identifier of the public land mobile network of the terminal device or the IP address of the first access network device, and the first access network device is located in the public land mobile network of the terminal device; determining, based on the first indication information, the first DSCP value, and the received mapping relationship corresponding to the second indication information, a QoS requirement corresponding to the first indication information and the first DSCP value; and sending the packet based on the QoS requirement.

18. A communication apparatus, wherein the apparatus comprises one or more functional units, and the one or more functional units are configured to perform the method according to any one of claims 1 to 8 or the method according to any one of claims 9 to 15.

19. A communication apparatus, comprising a processor, wherein the processor is coupled to a memory, and
the processor is configured to execute computer instructions stored in the memory, to enable the communication apparatus to perform the method according to any one of claims 1 to 8 or the method according to any one of claims 9 to 15.

20. A computer-readable storage medium, wherein the storage medium stores a computer program or instructions, and when the computer program or the instructions are executed by a communication apparatus, the method according to any one of claims 1 to 8 or the method according to any one of claims 9 to 15 is implemented.

21. A communication system, wherein the system comprises a residential gateway and a core network element, the residential gateway is configured to perform the method according to any one of claims 1 to 8, and the core network element is configured to perform the method according to any one of claims 9 to 15.

22. The system according to claim 21, wherein the system further comprises a terminal device, and the terminal device is configured to send a packet to the residential gateway.

23. The system according to claim 21 or 22, wherein the core network element is a session management network element in a public land mobile network of the residential gateway or a policy control network element in the public land mobile network of the residential gateway.
